(19) Europäisches Patentamt
European Patent Office
Office européen des brevets

(11) EP 3 046 948 B1

# (12) EUROPÄISCHE PATENTSCHRIFT

(45) Veröffentlichungstag und Bekanntmachung des Hinweises auf die Patenterteilung:
**14.11.2018 Patentblatt 2018/46**

(21) Anmeldenummer: **14758901.4**

(22) Anmeldetag: **03.09.2014**

(51) Int Cl.:
***C08G 69/48*** (2006.01) ***C11D 11/00*** (2006.01)
***C08G 69/10*** (2006.01) ***C08G 73/10*** (2006.01)
***C11D 3/37*** (2006.01)

(86) Internationale Anmeldenummer:
**PCT/EP2014/068674**

(87) Internationale Veröffentlichungsnummer:
**WO 2015/036292 (19.03.2015 Gazette 2015/11)**

## (54) MODIFIZIERTE POLYASPARAGINSÄUREN, IHRE HERSTELLUNG UND IHRE VERWENDUNG ALS DISPERGIERMITTEL UND BELAGSINHIBITOREN IN WASCH-, SPÜL- UND REINIGUNGSMITTELZUSAMMENSETZUNGEN UND IN DER WASSERBEHANDLUNG

MODIFIED POLYASPARTIC ACIDS, THEIR PREPARATION AND THEIR USE AS DISPERSION AGENT AND SCALE INHIBITORS IN WASHING, RINSING AND CLEANING COMPOSITIONS AND IN WATER TREATMENT

ACIDES POLYASPARTIQUES MODIFIÉS, LEUR FABRICATION ET LEUR UTILISATION COMME AGENTS DISPERSANTS ET INHIBITEURS DE DÉPÔTS DANS DES COMPOSITIONS DE PRODUITS DE LAVAGE, DE RINÇAGE ET DE NETTOYAGE ET DANS LE TRAITEMENT DE L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2013 EP 13184578**

(43) Veröffentlichungstag der Anmeldung:
**27.07.2016 Patentblatt 2016/30**

(73) Patentinhaber: **BASF SE**
**67056 Ludwigshafen am Rhein (DE)**

(72) Erfinder:
- **DETERING, Jürgen**
**67117 Limburgerhof (DE)**
- **TÜRKOGLU, Gazi**
**68163 Mannheim (DE)**
- **FEHRINGER, Dietrich**
**69234 Dielheim (DE)**
- **WEBER, Heike**
**68239 Mannheim (DE)**
- **ESPER, Claudia**
**67271 Kindenheim (DE)**

(74) Vertreter: **BASF IP Association**
**BASF SE**
**G-FLP-C006**
**67056 Ludwigshafen (DE)**

(56) Entgegenhaltungen:
**WO-A1-94/01486 WO-A1-95/21882**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Verfahren zur Herstellung modifizierter Polyasparaginsäuren, durch diese Verfahren herstellbare modifizierte Polyasparaginsäuren, sowie Zusammensetzungen, welche diese modifizierte Polyasparaginsäuren enthalten. Solche Zusammensetzungen sind insbesondere Reinigungs-, Spülmittel- und Waschmittelzusammensetzungen.

Durch radikalische Polymerisation erhältliche Polymere aus carboxylgruppenhaltigen Monomeren sind seit vielen Jahren wichtiger Bestandteil von phosphathaltigen und phosphatfreien maschinellen Spülmitteln, unter anderem Geschirrspülmitteln. Durch ihre schmutzdispergierende und belagsinhibierende Wirkung leisten sie einen erheblichen Beitrag zur Reinigungs- und Klarspülleistung der maschinellen Geschirrspülmittel. So sorgen sie dafür, dass auf dem Spülgut keine Salzablagerungen der härtebildenden Calcium- und Magnesiumionen zurückbleiben. Häufig werden Homo- und Copolymere der Acrylsäure für diesen Zweck eingesetzt.
Solche Polymere werden auch in flüssigen und festen Waschmitteln eingesetzt. Während des Waschvorgangs unterstützen sie aktiv die Waschleistung der Tenside und verhindern durch ihre schmutzdispergierenden Eigenschaften eine Vergrauung der Wäsche. Zusätzlich wirken sie als Inkrustationsinhibitoren, d.h. sie hemmen die unerwünschte Ablagerung unlöslicher anorganischer Salze (z.B. unlösliche Carbonate und Silikate) auf das textile Gewebe.
Ferner finden solche Polymere auch in wasserführenden Systemen als Mittel zur Verhinderung mineralischer Ablagerungen wie z.B. Calcium- und Magnesiumsulfat, Magnesiumhydroxid, Calcium- und Bariumsulfat und Calciumphosphat auf Wärmeübertragungsflächen oder in Rohrleitungen Verwendung. Als wasserführende Systeme sind hier u.a. Kühl- und Kesselspeisewassersysteme und industrielle Prozesswässer zu nennen. Aber auch in der Meerwasserentsalzung durch Destillation und durch Membranverfahren wie Umkehrosmose oder Elektrodialyse werden diese Polymere als Belagsinhibitoren eingesetzt.

Ein Nachteil dieser durch radikalische Polymerisation erhältlichen Polymere aus carboxylgruppenhaltigen Monomeren ist, dass sie unter aeroben Bedingungen, wie sie z.B. in einer kommunalen Kläranlage vorherrschen, nicht biologisch abbaubar sind.

Aufgrund von steigendem Umweltbewusstsein wächst die Nachfrage nach biologisch abbaubaren polymeren Alternativen zu den Polycarboxylaten auf Basis von Acrylsäure. Bisher auf dem Markt verfügbare biologisch abbaubare Polymere wie beispielsweise Polyasparaginsäure oder carboxymethyliertes Inulin haben sich jedoch als kommerziell nur schwer durchsetzbar erwiesen. Die Gründe sind mannigfaltig: unzureichende Wirkung in der spezifischen Anwendung, zu hohe Kosten aufgrund komplexer Herstellverfahren und/oder teurer Einsatzstoffe, keine oder nur geringe Flexibilität der Polymersynthese. So erlauben die praktizierten Verfahren zur Herstellung der Polyasparaginsäure im Gegensatz zu den Verfahren zur Herstellung von Polyacrylsäuren keine großen Variationen bezüglich Struktur, Molekulargewicht und Neutralisationsgrad. Die Polyasparaginsäure wird in neutralisierter Form als Natriumsalz gewonnen. Die Molekulargewichte bewegen sich je nach Herstellprozess zwischen 2000-3000 g/mol oder zwischen 5000-6000 g/mol. Eine Anpassung der Polymerstruktur oder des Molekulargewichts an spezifische anwendungstechnische Erfordernisse durch gezielte Verfahrensänderungen ist nicht oder nur sehr begrenzt möglich.

In WO 2011/001170 werden Reinigungsmittelzusammensetzungen für das maschinelle Geschirrspülen beschrieben, enthaltend Polyasparaginsäure, ein flüssiges nichtionisches Tensid und wenigstens ein festes nichtionisches Tensid, wobei die Herstellung der Polyasparaginsäure nicht beschrieben wird. In WO 2009/095645 werden Wasch- und Reinigungsmittelzusammensetzungen beschrieben, welche nachträglich modifizierte Polyasparaginsäuren mit Polyasparaginsäure als Rückgrat als Belagsverhinderer enthalten. Die modifizierten Polyasparaginsäuren werden durch Umsetzung der Polyasparaginsäure oder des Polysuccinimids mit PO/EO-Blockcopolymeren, Polyethylenimin oder Adenosintriphosphat erhalten. Ein solches Polyasparaginsäurerückgrat ist hinsichtlich seines Molekulargewichts nicht bis nur schwerlich einstellbar. WO 95/021882 beschreibt die Herstellung von Polyasparaginsäuren durch Reaktion von Maleinsäure, Citronensäure-Monohydrat, Ammoniak und Hexandiamin. Der Einsatz der Polymere in Reiniger-, Spülmittel, oder Waschmittelzusammensetzungen wird nicht beschrieben.

WO94/01486 offenbart modifizierte Polyasparaginsäuren und deren Anwendung in Reinigungs-, Spül- und Waschmitteln.

WO95/21882 offenbart modifizierte Polyasparaginsäuren und deren Anwendung in Reinigungs-, Spül- und Waschmitteln.

Die Aufgabe der Erfindung war es daher, ein Verfahren zu Herstellung von Polymeren zur Verfügung zu stellen, welche

(1) sich als Zusatzstoff in Reinigerzusammensetzungen, in Spülmittelzusammensetzungen wie bspw. Geschirrspülmittelzusammensetzungen, insbesondere als Zusatzstoff zu phosphatfreien Reiniger- und Spülzusammensetzungen für die maschinelle Geschirrreinigung, und als Zusatzstoff zu flüssigen und festen Waschmitteln, und zum Zwecke der Belagsinhibierung und/oder Dispergierung in wasserführenden Systemen einsetzen lassen,
(2) in ihrer Polymerstruktur und ihrem Molekulargewicht leicht variabel einstellbar sind, und

(3) biologisch abbaubar sind.

Diese Aufgabe wurde durch die vorliegende Erfindung gemäß der Ansprüche und der nachfolgenden Beschreibung und Beispiele gelöst.

Die vorliegende Erfindung beschreibt unter anderem Herstellungsverfahren für modifizierte Polyasparaginsäuren, welche in ihrem Molekulargewicht leicht einstellbar und biologisch abbaubar sind und sich gut als Zusatzstoff in Reinigungs-, Spülmittel- und Waschmittelzusammensetzungen eignen. Auch weisen sie sehr gute Dispergier-, Belagsinhibitor- und Spotinhibierungseigenschaften auf.

Die vorliegende Erfindung betrifft daher Verfahren zur Herstellung modifizierter Polyasparaginsäuren oder ihrer Salze, umfassend folgende Schritte:

(i) Polykondensation von

(a) 50 bis 98 mol%, bevorzugt 60 bis 95 mol%, besonders bevorzugt 70 bis 95 mol% Asparaginsäure,
(b) 1 bis 49 mol%, bevorzugt 3 bis 40 mol%, besonders bevorzugt 5 bis 30 mol% mindestens einer carboxylgruppenhaltigen Verbindung, und
(c) 1 bis 30 mol% , bevorzugt 1 bis 25 mol%, besonders bevorzugt 2 bis 20 mol% eines Diamins oder eines Aminoalkohols,

bei einer Temperatur von 100 bis 270 °C für 1 Minute bis 50 Stunden, wobei (b) keine Asparaginsäure ist;
(ii) anschließender Hydrolyse der Cokondensate unter Zugabe einer Base; und
(iii) optional Ansäuern des in (ii) erhaltenen Salzes der Polyasparaginsäure mit Mineralsäuren, z.B. Schwefelsäure oder Salzsäure, wobei das Verhältnis von (b) : (c) zwischen 5:1 und 1:1,5 liegt.

Der optionale Schritt (iii) des Ansäuerns des Salzes der Polyasparaginsäure im erfindungsgemäßen Verfahren dient dem Erhalt der Polyasparaginsäure in Säureform und kann in dem Fachmann bekannter Art und Weise durchgeführt werden und wie hier beispielhaft dargestellt. Falls nur das Salz der Polyasparaginsäure gewünscht ist, bspw. als Zwischenstufe, kann auf den Schritt (iii) im Zusammenhang mit der vorliegenden Erfindung verzichtet werden. Wenn im Zusammenhang mit der vorliegenden Erfindung von Polyasparaginsäure die Rede ist, werden hierbei entsprechend auch ihre entsprechenden Salze umfasst, wie sie gemäß Schritt (ii) des erfindungsgemäßen Herstellverfahrens erhältlich sind bzw. erhalten werden und wie vom Fachmann erkannt.

Als Asparaginsäure (a) im Zusammenhang mit der erfindungsgemäßen Herstellung der modifizierten Polyasparaginsäure kann sowohl L- als auch D- und DL-Asparaginsäure eingesetzt werden. Bevorzugt wird L-Asparaginsäure eingesetzt.

Als carboxylhaltige Verbindung (b) im Zusammenhang mit der erfindungsgemäßen Herstellung der modifizierten Polyasparaginsäure kann unter anderem eine Carbonsäure (Monocarbonsäure oder Polycarbonsäure), eine Hydroxycarbonsäure und/oder eine Aminosäure (außer Asparaginsäure) eingesetzt werden. Solche Carbonsäuren oder Hydroxycarbonsäuren sind bevorzugt mehrbasisch. In diesem Zusammenhang können also bei der erfindungsgemäßen Herstellung der modifizierten Polyasparaginsäure mehrbasische Carbonsäuren eingesetzt werden, z.B. Oxalsäure, Adipinsäure, Fumarsäure, Maleinsäure, Itaconsäure, Aconitsäure, Bernsteinsäure, Malonsäure, Korksäure, Azelainsäure, Diglykolsäure, Glutarsäure, $C_1$-$C_{26}$ Alkylbernsteinsäuren (z.B. Octylbernsteinsäure), $C_2$-$C_{26}$ Alkenylbernsteinsäuren (z.B. Octenylbernsteinsäure), 1,2,3-Propantricarbonsäure, 1,1,3,3-Propantetracarbonsäure, 1,1,2,2-Ethantetracarbonsäure, 1,2,3,4-Butantetracarbonsäure, 1,2,2,3-Propantetracarbonsäure, oder 1,3,3,5-Pentantetracarbonsäure. Ferner können in diesem Zusammenhang mehrbasische Hydroxycarbonsäuren eingesetzt werden, z.B. Citronensäure, Isocitronensäure, Schleimsäure, Weinsäure, Tartronsäure, oder Äpfelsäure. Als Aminosäuren können in diesem Zusammenhang unter anderem Aminocarbonsäuren (z.B. Glutaminsäure, Cystein), basische Diaminocarbonsäuren (z.B. Lysin, Arginin, Histidin, Aminocaprlactam), neutrale Aminosäuren (z.B. Glycin, Alanin, Valin, Leucin, Isoleucin, Methionin, Cystein, Norleucin, Caprolactam, Asparagin, Isoasparagin, Glutamin, Isoglutamin), Aminosulfonsäuren (z.B. Taurin), Hydroxylaminosäuren (z.B. Hydroxyprolin, Serin, Threonin), Iminocarbonsäuren (z.B. Prolin, Iminodiessigsäure), oder aromatische und heterocyclische Aminosäuren (z.B. Anthranilsäure, Tryptophan, Tyrosin, Histidin) eingesetzt werden, aber nicht Asparaginsäure. Bevorzugte carboxylhaltige Verbindungen (b) im Zusammenhang mit der erfindungsgemäßen Herstellung der modifizierten Polyasparaginsäuren sind 1,2,3,4-Butantetracarbonsäure, Zitronensäure, Glycin, Glutaminsäure, Itaconsäure, Bernsteinsäure, Taurin, Maleinsäure und Glutarsäure, besonders bevorzugt 1,2,3,4-Butantetracarbonsäure, Zitronensäure, Glycin und Glutaminsäure.

Als Diamin (c) im Zusammenhang mit der erfindungsgemäßen Herstellung der modifizierten Polyasparaginsäure kommen sämtliche Diamine mit zwei primären Aminogruppen in Betracht, zum Beispiel:

aliphatisch linear: Ethan-1,2-diamin, Propan-1,3-diamin, Butan-1,4-diamin, Pentan-1,5-diamin, Hexan-1,6-diamin,

Heptan-1,7-diamin, Octane-1,8-diamin;
aliphatisch verzweigt: Butan-1,2-diamin, Propane-1,2-diamin, 2,2-Dimethylpropan-1,3-diamin, 2-Methylpentan-1,5-diamin, 2,2,4-Trimethylhexan-1,6-diamin, 2,4,4-Trimethylhexan-1,6-diamin, 2-Butyl-2-ethyl-pentan-1,5-diamine;
aliphatisch cyclisch: 3-(Aminomethyl)-3,5,5-trimethyl-cyclohexanamin, 4-[(4-aminocyclohexyl)methyl]cyclohexanamin, 4-[(4-Amino-3-methyl-cyclohexyl)methyl]-2-methyl-cyclohexanamin, 4-Methylcyclohexan-1,3-diamin, 2-Methylcyclohexan-1,3-diamin;
Polyamine und Polyetheramine: N'-(2-Aminoethyl)ethan-1,2-diamin, N'-(3-aminopropyl)propan-1,3-diamin, N'-(2-Aminoethyl)propan-1,3-diamin, N'-(3-aminopropyl)butan-1,4-diamin, N,N'-Bis(3-aminopropyl)butan-1,4-diamin, N'-[2-(3-aminopropylamino)ethyl]propan-1,3-diamin, N'-(3-Aminopropyl)-N'-methyl-propan-1,3-diamin, 2-[2-(2-Aminoethoxy)ethoxy]ethanamin], 3-[2-[2-(3-Aminopropoxy)ethoxy]ethoxy]propan-1-amin, 3-[4-(3-Aminopropoxy)butoxy]propan-1-amin, und Polyetheramine der Formel (I):

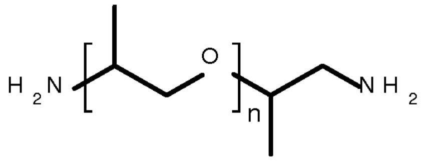

(I),

wobei n 1 bis 10, bevorzugt 2 bis 7 ist.

Als Aminoalkohol (c) im Zusammenhang mit der vorliegenden Erfindung kommen z.B. Aminohydroxyverbindungen mit einer primären Aminogruppe und einer Hydroxygruppe in Betracht. Solche Aminohydroxyverbindungen (c) können beispielsweise ausgewählt sein aus der Gruppe bestehend aus Monoethanolamin, 3-Aminopropan-1-ol, 1-Aminopropan-2-ol, 5-Aminopentan-1-ol und 2-(2-Aminoethoxy)ethanol.

Als Base in Schritt (ii) bei der Hydrolyse der Cokondensate bei der erfindungsgemäßen Herstellung der modifizierten Polyasparaginsäuren können unter anderem eingesetzt werden: Alkali- und Erdalkalimetallbasen wie Natronlauge, Kalilauge, Calciumhydroxid oder Bariumhydroxid; Carbonate wie Soda und Kaliumcarbonat; Ammoniak und primäre, sekundäre oder tertiäre Amine; andere Basen mit primären, sekundären oder tertiären Aminogruppen. Bevorzugt ist im Zusammenhang mit der vorliegenden Erfindung sind Natronlauge oder Ammoniumhydroxid.

Die erfindungsgemäße Herstellung der modifizierten Polyasparaginsäuren erfolgt im Allgemeinen über eine Polykondensation von Asparaginsäure (a) mit mindestens einer carboxylhaltigen Verbindungen (nicht Asparaginsäure) (b), einem Diamin oder Aminoalkohol (c), anschließender Hydrolyse der Cokondensate unter Zugabe einer Base, und - zum Erhalt der Säure aus dem Salz - optional Ansäuerung wie hier oben und unten dargestellt und beschrieben. Im Folgenden wird die erfindungsgemäße Herstellung der modifizierten Polyasparaginsäuren beispielhaft beschrieben. Diese Herstellbeschreibung darf nicht verstanden werden als limitierend im Hinblick auf die erfindungsgemäß einzusetzenden modifizierten Polyasparaginsäuren. Die erfindungsgemäß herzustellenden modifizierten Polyasparaginsäuren bzw. ihre Salze - welche jeweils ebenfalls Gegenstand der vorliegenden Erfindung sind - umfassen neben solchen, welche durch das erfindungsgemäße Herstellverfahren hergestellt oder erhalten werden auch solche, welche durch das erfindungsgemäße Herstellverfahren herstellbar oder erhältlich sind. Im Zusammenhang mit der vorliegenden Erfindung können die modifizierten Polyasparaginsäuren z.B. hergestellt werden durch Polykondensation der Komponenten (a), (b), (c) d.h. Asparaginsäure (a), mindestens eine carboxylhaltige Verbindung (b), ein Diamin oder ein Aminoalkohol (c) in den molaren Verhältnissen wie hier beschrieben. Die Polykondensation gemäß Schritt (i) des erfindungsgemäßen Herstellverfahrens kann bei Temperaturen von 100 bis 270°C erfolgen, bevorzugt bei 120 bis 250°C, besonders bevorzugt bei 180 bis 220 °C. Die Kondensation (das Tempern) wird vorzugsweise im Vakuum oder unter Inertgasatmosphäre (bspw. $N_2$, Argon) durchgeführt. Die Kondensation kann aber auch unter erhöhtem Druck oder in einem Gasstrom, z.B. Kohlendioxid, Luft, Sauerstoff oder Wasserdampf erfolgen. Je nach den gewählten Reaktionsbedingungen liegen die Reaktionszeiten für die Kondensation erfindungsgemäß im Allgemeinen zwischen 1 Minute und 50 Stunden, bevorzugt zwischen 5 bis 8 Stunden. Die Polykondensation kann beispielsweise in fester Phase durchgeführt werden, in dem man zunächst eine wässrige Lösung bzw. Suspension von Asparaginsäure (a), mindestens einer carboxylhaltigen Verbindung (b), einem Diamin oder eines Aminoalkohols (c) herstellt und die Lösung zur Trockne eindampft. Hierbei kann bereits eine Kondensation einsetzen. Für die Kondensation eignen sich beispielsweise als Reaktionsapparate Heizbänder, Kneter, Mischer, Schaufeltrockner, Zähphasentrockner, Extruder, Drehrohröfen und andere beheizbare Vorrichtungen, in denen die Kondensation von Feststoffen unter Entfernung von Reaktionswasser durchgeführt werden kann. Polykondensate mit niedrigem Molekulargewicht können in auch druckdicht verschlossenen Gefäßen hergestellt werden, indem das entstehende Reaktionswasser nicht oder nur teilweise entfernt wird. Auch durch Infrarotstrahlung oder Mikrowellenstrahlung lässt sich die Polykondensation durchführen. Möglich ist auch eine säurekatalysierte Polykondensation,

beispielsweise mit anorganischen Säuren des Phosphors oder Schwefels oder mit Halogenwasserstoffen. Derartige säurekatalysierte Polykondensationen sind beispielsweise auch allgemein in DE 4221875.6 beschrieben. Die optionale Ansäuerung des Salzes der modifizierten Polyasparaginsäure kann beispielsweise erfolgen durch Zugabe einer definierten Menge einer konzentrierten oder verdünnten Mineralsäure wie beispielsweise Schwefelsäure oder Salzsäure zu einer wässrigen Natriumsalzlösung der modifizierten Polyasparaginsäure. Die Ansäuerung kann auch durch Behandlung mit einem sauren Ionenaustauscher wie zum Beispiel Amberlite IR 120 (Hydrogen Form) erfolgen, indem man die wässrige Na-Salzlösung der modifizierten Polyasparaginsäure über eine mit dem Ionenaustauscher gepackten Säule fließen lässt.

Vorteilhaft kann auch die Zugabe von kleinen Mengen Methansulfonsäure (bspw. 0,1 bis 20 mol % bezogen auf eingesetzte Menge (in Mol) Asparaginsäure) bei der Polykondensation sein. Methansulfonsäure ist wie die Polyasparaginsäure biologisch abbaubar. Kleine Mengen Methansulfonsäure können im Polymerprodukt verbleiben, ohne dass ökologische Nachteile entstehen und ohne dass die Performance in den zahlreichen Anwendungen beeinflusst wird. Eine aufwendige Aufarbeitung bzw. Reinigung ist nicht notwendig. Ausbeuteverluste durch die Aufarbeitung werden vermieden.

Bei der thermischen Polykondensation von Asparaginsäure (a) mit einer carboxylhaltigen Verbindungen (b) und einem Diamin oder einem Aminoalkohol (c) (mit oder ohne Methansulfonsäure) wie hierin beschrieben fällt das Polykondensat im Allgemeinen in Form der wasserunlöslichen modifizierten Polyaspartimide an. Die Cokondensate der Asparaginsäure können von den nicht umgesetzten Ausgangsstoffen beispielsweise dadurch gereinigt werden, indem das Kondensationsprodukt zerkleinert und mit Wasser bei Temperaturen von 10 bis 100 °C extrahiert wird. Dabei lösen sich die nicht umgesetzten Einsatzstoffe heraus und ggf. eingesetzte Methansulfonsäure wird ausgewaschen. Nicht umgesetzte Asparaginsäure lässt sich durch Extraktion mit 1-N-Salzsäure leicht herauslösen.

Die modifizierten Polyasparaginsäuren werden aus den Polykondensaten vorzugsweise dadurch erhalten, dass man die Polycokondensate in Wasser aufschlämmt und bei Temperaturen vorzugsweise im Bereich von 0 bis 90 °C unter Zugabe einer Base hydrolysiert und neutralisiert. Die Hydrolyse und Neutralisation findet vorzugsweise bei pH-Werten von 8 bis 10 statt. Als Basen kommen beispielsweise Alkali- und Erdalkalimetallbasen wie Natronlauge, Kalilauge, Calciumhydroxid oder Bariumhydroxid in Frage. Als Basen kommen auch beispielsweise Carbonate wie Soda und Kaliumcarbonat in Frage. Als Base eignen sich auch Ammoniak und primäre, sekundäre oder tertiäre Amine und andere Basen mit primären, sekundären oder tertiären Aminogruppen. Bei Verwendung von Aminen zur Umsetzung von Polyaspartimid, können die Amine aufgrund ihrer hohen Reaktionsbereitschaft sowohl salzartig als auch amidartig an die Polyasparaginsäure gebunden sein. Bei der Behandlung mit Basen erhält man teilweise oder vollständig neutralisierte Polycokondensate, die entsprechend dem Einsatz bei der vorhergehenden Polykondensation 50 bis 98 mol%, bevorzugt 60 bis 95 mol%, besonders bevorzugt 70 bis 95 mol% Asparaginsäure, 1 bis 49 mol%, bevorzugt 3 bis 40 mol%, besonders bevorzugt 5 bis 30 mol% einer carboxylhaltigen Verbindung, und 1 bis 30 mol%, bevorzugt 1 bis 25 mol%, besonders bevorzugt 2 bis 20 mol% eines Diamins oder eines Aminoalkohols enthalten, in Form der den Basen entsprechenden Salze, bspw. in Form der Alkali-, Erdalkali- bzw. Ammoniumsalze.

Das molare Verhältnis der in der Polykondensation (i) des erfindungsgemäßen Herstellungsverfahrens einzusetzenden carboxylhaltigen Verbindung (b) zum Diamin oder Aminoalkohol (c) liegt zwischen 5:1 und 1:1,5, bevorzugt zwischen 3:1 und 1:1,2, besonders bevorzugt zwischen 3:1 und 1:1 oder 2:1 und 1:1. Das Verhältnis kann unter anderem bei 1:1, 2:1 oder 2,67:1 liegen wie hier beispielhaft gezeigt.

Die vorliegende Erfindung betrifft ferner modifizierte Polyasparaginsäuren, welche durch das erfindungsgemäße Herstellverfahren hergestellt bzw. erhalten werden oder dadurch herstellbar bzw. erhältlich sind.

Die erfindungsgemäß hergestellten/herstellbaren bzw. einzusetzenden modifizierten Polyasparaginsäuren bzw. ihre Salze können als wässrige Lösung oder in fester Form, z.B. in Pulver- oder Granulatform verwendet werden. Wie dem Fachmann bekannt ist, kann man die Pulver- oder Granulatform beispielsweise durch Sprühtrocknung, Sprühgranulierung, Wirbelschicht-Sprühgranulierung, Walzentrockung oder Gefriertrocknung der wässrigen Lösung der Polyasparaginsäuren bzw. ihren Salzen erhalten.

Die erfindungsgemäß herstellbaren modifizierten Polyasparaginsäuren zeichnen sich unter anderem durch ihre sehr gute belagsinhibierende und dispergierende Wirkung aus, und zwar sowohl gegenüber anorganischen als auch organischen Belägen. Insbesondere inhibieren sie Beläge aus Calcium- und Magnesiumcarbonat und Calcium- und Magnesiumphosphaten und - phosphonaten. Zusätzlich verhindern sie Ablagerungen, die aus den Schmutzbestandteilen einer Spülflotte stammen, wie Fett-, Eiweiß- und Stärkebeläge.

Die vorliegende Erfindung betrifft daher auch die Verwendung der erfindungsgemäß herstellbaren modifizierten Polyasparaginsäuren als Belagsinhibitoren oder Dispergiermitteln. Die modifizierten Polyasparaginsäuren können dabei sowohl als Zusatzstoff in Reinigungs-, Spülmittel-(insbesondere maschinelle Geschirrspülmittel-) oder Waschmitteln, als auch als Belagsinhibitoren oder Dispergiermittel in wasserführenden Systemen verwendet werden wie hier dargestellt und beschrieben.

Auch betrifft die vorliegende Erfindung Zusammensetzungen - insbesondere Reinigungsmittel-, Spülmittel- und Waschmittelzusammensetzungen -, welche modifizierte Polyasparaginsäuren enthalten, die durch das erfindungsgemäße Verfahren herstellbar bzw. erhältlich sind. Eine Ausführungsform der vorliegenden Erfindung betrifft insbesondere Spülmittelzusammensetzungen für maschinelles Geschirrspülen, welche die modifizierten Polyasparaginsäuren wie hier beschrieben enthalten.
Solche Zusammensetzungen enthalten neben den modifizierten Polyasparaginsäuren der Erfindung weitere Bestandteile wie bspw. Lösemittel, Tenside oder Komplexbildner.

Die modifizierten Polyasparaginsäuren der Erfindung können nach dem Fachmann bekannten Verfahren direkt in die Formulierungen (Gemische) in ihren verschiedenen Darreichungsformen eingearbeitet werden. Hierbei sind beispielsweise feste Formulierungen wie Pulver, Tabletten, gelartige und flüssige Formulierungen zu nennen. Die erfindungsgemäßen maschinellen Geschirrspülmittelzusammensetzungen und die anderen Reinigungsmittel-, Spülmittel- und Waschmittelzusammensetzungen können in flüssige, gelartiger oder fester Form, ein- oder mehrphasig, als Tabletten oder in Form anderer Dosiereinheiten, verpackt oder unverpackt bereitgestellt werden. Die erfindungsgemäß herstellbaren modifizierten Polyasparaginsäuren können in diesem Zusammenhang sowohl in mehrkomponentigen Produktsystemen (getrennter Einsatz von Reiniger, Klarspüler und Regeneriersalz), als auch in solchen Geschirrspülmitteln eingesetzt werden, in denen die Funktionen von Reiniger, Klarspülmittel und Regeneriersalz in einem Produkt vereinigt sind (bspw. 3-in-1-Produkte, 6-in-1-Produkte, 9-in-1-Produkte, all-in-one Produkte).

Die erfindungsgemäßen Spülmittelzusammensetzungen umfassen

($A_S$) 1-20 Gew%, bevorzugt 1-15 Gew%, besonders bevorzugt 2-12 Gew% mindestens einer hier beschriebenen und erfindungsgemäß einzusetzenden modifizierten Polyasparaginsäure;
($B_S$) 0-50 Gew% Komplexbildner;
($C_S$) 0,1-80 Gew% Builder und/oder Co-Builder;
($D_S$) 0,1-20 Gew% nichtionische Tenside;
($E_S$) 0-30 Gew% Bleichmittel, Bleichaktivatoren und Bleichkatalysatoren;
($F_S$) 0-8 Gew% Enzyme; und
($G_S$) 0-50 Gew% Zusatzstoffe.

Die Summe ($A_S$) bis ($G_S$) beträgt 100 Gew%.

Die erfindungsgemäße Spülmittelzusammensetzungen ist insbesondere als Spülmittelzusammensetzung für maschinelles Geschirrspülen geeignet. In einer Ausführungsform handelt es sich daher bei der erfindungsgemäßen Spülmittelzusammensetzung um eine maschinelle Geschirrspülmittelzusammensetzung.

Als Komplexbildner ($B_S$) können beispielsweise eingesetzt werden: Nitrilotriessigsäure, Ethylendiamintetraessigsäure, Diethylentriaminpentaessigsäure, Hydroxyethylethylendiamintriessigsäure, Methylglycindiessigsäure, Glutaminsäurediessigsäure, Iminodibernsteinsäure, Hydroxyiminodibernsteinsäure, Ethylendiamindibernsteinsäure, Asparaginsäurediessigsäure, sowie jeweils deren Salze. Bevorzugte Komplexbildner ($B_S$) sind Methylglycindiessigsäure und Glutaminsäurediessigsäure und deren Salze. Besonders bevorzugte Komplexbildner ($B_S$) sind Methylglycindiessigsäure und deren Salze. Bevorzugt sind erfindungsgemäß 3 bis 50 Gew% Komplexbildner ($B_S$).

Als Builder und/oder Co-Builder ($C_S$) können insbesondere wasserlösliche oder wasserunlösliche Substanzen, deren Hauptaufgabe im Binden von Calcium- und Magnesiumionen besteht, eingesetzt werden. Dies können niedermolekulare Carbonsäuren sowie deren Salze wie Alkalicitrate sein, insbesondere wasserfreies Trinatriumcitrat oder Trinatriumcitratdihydrat, Alkalisuccinate, Alkalimalonate, Fettsäuresulfonate, Oxydisuccinat, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat und $\alpha$-Hydroxypropionsäure.
Eine weitere Substanzklasse mit Cobuildereigenschaften, welche in den erfindungsgemäßen Reinigungsmitteln enthalten sein können, stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.
Unter anderem können als Builder Silikate eingesetzt werden. Enthalten sein können kristalline schichtförmige Silikate mit der allgemeinen Formel $NaMSi_xO_{2x+1}\ yH_2O$, wobei M Natrium oder Wasserstoff bedeutet, x eine Zahl von 1,9 bis 22, vorzugsweise von 1,9 bis 4, wobei besonders bevorzugte Werte für x 2, 3 oder 4 sind und y eine Zahl von 0 bis 33, vorzugsweise 0 bis 20 ist. Daneben können amorphe Natriumsilikate mit einem $SiO_2 : Na_2O$-Verhältnis von 1 bis 3,5, vorzugsweise von 1,6 bis 3 und insbesondere von 2 bis 2,8 zum Einsatz kommen.

Weiterhin können als Builder oder Co-Builder ($C_S$) im Zusammenhang mit der erfindungsgemäßen Spülmittelzusammensetzung Carbonate und Hydrogencarbonate eingesetzt werden, unter welchen die Alkalisalze, insbesondere Natriumsalze, bevorzugt werden. Weiterhin können als Cobuilder Homo- und Copolymere der Acrylsäure oder der Methacrylsäure eingesetzt werden, die bevorzugt eine gewichtsmittlere Molmasse von 2.000 bis 50.000 g/mol aufweisen. Als Comonomere eignen sich insbesondere monoethylenisch ungesättigte Dicarbonsäuren wie Maleinsäure, Fumarsäure und Itaconsäure sowie deren Anhydride wie Maleinsäureanhydrid. Es eignen sich auch Sulfonsäuregruppen haltige Comonomere wie 2-Acrylamido-2-methylpropansulfonsäure, Allylsulfonsäure und Vinylsulfonsäure. Auch hydrophobe Comonomere sind geeignet wie beispielsweise Isobuten, Diisobuten, Styrol, alpha-Olefine mit 10 oder mehr Kohlenstoffatomen. Hydrophile Monomere mit Hydroxyfunktion oder Alkylenoxidgruppen können ebenfalls als Comonomere verwendet werden. Beispielsweise seien genannt: Allylalkohol und Isoprenol sowie deren Alkoxylate und Methoxypolyethylenglykol(meth)acrylat.
Bevorzugte Mengen sind für Builder und/oder Co-Builder im Zusammenhang mit der erfindungsgemäßen Spülmittelzusammensetzung 5 bis 80 Gew%, besonders bevorzugt 10 bis 75 Gew%, 15 bis 70 Gew% oder 15 bis 65 Gew%.

Als nichtionische Tenside ($D_S$) im Zusamenhang mit der erfindungsgemäßen Spülmittelzusammensetzung können beispielsweise schwach oder niedrig schäumende nichtionische Tenside eingesetzt werden. Diese können in Anteilen von 0,1 bis 20 Gew%, bevorzugt von 0,1 bis 15 Gew%, besonders bevorzugt von 0,25 bis 10 Gew% oder 0,5 bis 10 Gew% vorliegen. Geeignete nichtionische Tenside umfassen unter anderem Tenside der allgemeinen Formel (II)

$$R^1\text{-O-}(CH_2CH_2O)_a\text{-}(CHR^2CH_2O)_b\text{-}R^3 \qquad \text{(II)},$$

worin $R^1$ ein linearer oder verzweigter Alkylrest mit 8 bis 22 C-Atomen ist,
$R^2$ und $R^3$ unabhängig voneinander Wasserstoff oder ein linearer oder verzweigter Alkylrest mit 1 bis 10 C-Atomen oder H sind, wobei $R^2$ bevorzugt Methyl ist, und
a und b unabhängig voneinander 0 bis 300 sind. Bevorzugt ist a = 1 - 100 und b = 0 - 30.

Auch geeignet im Sinne der vorliegenden Erfindung sind Tenside der Formel (III)

$$R^{4\text{-}}O\text{-}[CH_2CH(CH_3)O]_c[CH_2CH_2O]_d[CH_2CH(CH_3)O]_eCH_2CH(OH)R^5 \qquad \text{(III)},$$

worin $R^4$ für einen linearen oder verzweigten aliphatischen Kohlenwasserstoffrest mit 4 bis 22 Kohlenstoffatomen oder Mischungen hieraus steht,
$R^5$ einen linearen oder verzweigten Kohlenwasserstoffrest mit 2 bis 26 Kohlenstoffatomen oder Mischungen hieraus bezeichnet,
c und e für Werte zwischen 0 und 40 steht, und
d für einen Wert von mindestens 15 steht.

Auch geeignet im Sinne der vorliegenden Erfindung sind Tenside der Formel (IV)

$$R^6O\text{-}(CH_2CHR^7O)_f(CH_2CH_2O)_g(CH_2CHR^8O)_h\text{-CO-}R^9 \qquad \text{(IV)},$$

worin $R^6$ ein verzweigter oder unverzweigter Alkylrest mit 8 bis 16 Kohlenstoffatomen ist,
$R^7$, $R^8$ unabhängig voneinander H oder ein verzweigter oder unverzweigter Alkylrest mit 1 bis 5 Kohlenstoffatomen sind,
$R^9$ ein unverzweigter Alkylrest mit 5 bis 17 Kohlenstoffatomen ist,
f, h unabhängig voneinander eine Zahl von 1 bi 5 sind, und
g eine Zahl von 13 bis 35 ist.

Die Tenside der Formeln (II), (III) und (IV) können sowohl statistische Copolymere als auch Block-Copolymere sein, bevorzugt sind sie als Block-Copolymere.
Weiterhin können im Zusammenhang mit der vorliegenden Erfindung Di- und Multiblockcopolymerisate, aufgebaut aus Ethylenoxid (EO) und Propylenoxid (PO), eingesetzt werden, die beispielsweise unter der Bezeichnung Pluronic® (BASF SE) oder Tetronic® (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside sind in EP-A 851 023 sowie in DE-A 198 19 187 offenbart.
Es können auch Gemische mehrerer verschiedener nichtionischer Tenside enthalten sein. Die erfindungsgemäßen

Spülmittelzusammensetzungen können weiterhin anionische oder zwitterionische Tenside enthalten, bevorzugt in Mischung mit nichtionischen Tensiden. Geeignete anionische und zwitterionischer Tenside sind ebenfalls in EP-A 851 023 sowie DE-A 198 19 187 genannt.

Als Bleichmittel und Bleichaktivatoren ($E_S$) können im Zusammenhang mit den erfindungsgemäßen Spülmittelzusammensetzungen dem Fachmann bekannte Vertreter eingesetzt werden. Bleichmittel unterteilen sich in Sauerstoffbleichmittel und chlorhaltige Bleichmittel. Verwendung als Sauerstoffbleichmittel finden Alkalimetallperborate und deren Hydrate sowie Alkalimetallpercarbonate. Bevorzugte Bleichmittel sind hierbei Natriumperborat in Form des Mono- oder Tetrahydrats, Natriumpercarbonat oder die Hydrate von Natriumpercarbonat. Ebenfalls als Sauerstoffbleichmittel einsetzbar sind Persulfate und Wasserstoffperoxid. Typische Sauerstoffbleichmittel sind auch organische Persäuren wie beispielsweise Perbenzoesäure, Peroxy-alpha-Naphthoesäure, Peroxylaurinsäure, Peroxystearinsäure, Phthalimidoperoxycapronsäure, 1,12-Diperoxydodecandisäure, 1,9-Diperoxyazelainsäure, Diperoxoisophthalsäure oder 2-Decyldiperoxybutan-1,4-disäure. Außerdem können auch folgende Sauerstoffbleichmittel in der Spülmittelzusammensetzung Verwendung finden: Kationische Peroxysäuren, die in den Patentanmeldungen US 5,422,028, US 5,294,362 sowie US 5,292,447 beschrieben sind, und Sulfonylperoxysäuren, die in der Patentanmeldung US 5,039,447 beschrieben sind. Sauerstoffbleichmittel können in Mengen von im Allgemeinen 0,1 bis 30 Gew%, bevorzugt von 1 bis 20 Gew%, besonders bevorzugt von 3 bis 15 Gew%, bezogen auf die gesamte Spülmittelzusammensetzung, eingesetzt werden. Chlorhaltige Bleichmittel sowie die Kombination von chlorhaltigen Bleichmittel mit peroxidhaltigen Bleichmitteln können im Zusammenhang mit den erfindungsgemäßen Spülmittelzusammensetzungen ebenfalls verwendet werden. Bekannte chlorhaltige Bleichmittel sind beispielsweise 1,3-Dichloro-5,5-dimethylhydantoin, N-Chlorosulfamid, Chloramin T, Dichloramin T, Chloramin B, N,N'-Dichlorbenzoylharnstoff, p-Toluolsulfondichloroamid oder Trichlorethylamin. Bevorzugte chlorhaltige Bleichmittel sind hierbei Natriumhypochlorit, Calciumhypochlorit, Kaliumhypochlorit, Magnesiumhypochlorit, Kaliumdichloroisocyanurat oder Natriumdichloroisocyanurat. Chlorhaltige Bleichmittel können in diesem Zusammenhang in Mengen von 0,1 bis 30 Gew%, bevorzugt von 0,1 bis 20 Gew%, bevorzugt von 0,2 bis 10 Gew%, besonders bevorzugt von 0,3 bis 8 Gew%, bezogen auf die gesamte Spülmittelzusammensetzung, eingesetzt werden.

Weiterhin können in geringen Mengen Bleichmittelstabilisatoren wie beispielsweise Phosphonate, Borate, Metaborate, Metasilikate oder Magnesiumsalze zugegeben werden. Bleichaktivatoren können im Rahmen der vorliegenden Erfindung Verbindungen sein, welche unter Perhydrolysebedingungen aliphatische Peroxocarbonsäuren mit vorzugsweise 1 bis 10 Kohlenstoffatomen, insbesondere 2 bis 4 Kohlenstoffatomen, und/oder substituierte Perbenzoesäure ergeben. Geeignet sind hierbei unter anderem Verbindungen, die eine oder mehrere N- bzw. O-Acylgruppen und/oder gegebenenfalls substituierte Benzoylgruppen enthalten, beispielsweise Substanzen aus der Klasse der Anhydride, Ester, Imide, acylierten Imidazole oder Oxime. Beispiele sind Tetraacetylethylendiamin (TAED), Tetraacetylmethylendiamin (TAMD), Tetraacetylglykoluril (TAGU), Tetraacetylhexylendiamin (TAHD), N-Acylimide, wie beispielsweise N-Nonanoylsuccinimid (NOSI), acylierte Phenolsulfonate, wie beispielsweise n-Nonanoyl- oder Isononanoyloxybenzolsulfonate (n- bzw. iso-NOBS), Pentaacetylglucose (PAG), 1,5-Diacetyl-2,2-dioxohexahydro-1,3,5-triazin (DADHT) oder Isatosäureanhydrid (ISA). Ebenfalls als Bleichaktivatoren eignen sich Nitrilquats wie beispielsweise N-Methyl-Morpholinium-Acetonitril-Salze (MMA-Salze) oder Trimethylammoniumacetonitril-Salze (TMAQ-Salze). Bevorzugt eignen sich Bleichaktivatoren aus der Gruppe bestehend aus mehrfach acylierten Alkylendiaminen, besonders bevorzugt TAED, N-Acylimide, besonders bevorzugt NOSI, acylierte Phenolsulfonate, besonders bevorzugt n- oder iso-NOBS, MMA, und TMAQ. Bleichaktivatoren können im Zusammenhang mit der vorliegenden Erfindung in Mengen von 0,1 bis 30 Gew%, bevorzugt von 0,1 bis 10 Gew%, bevorzugt von 1 bis 9 Gew%, besonders bevorzugt von 1,5 bis 8 Gew%, bezogen auf die gesamte Spülmittelzusammensetzung eingesetzt werden.

Zusätzlich zu den konventionellen Bleichaktivatoren oder an deren Stelle können auch sogenannte Bleichkatalysatoren in Klarspülerpartikel eingearbeitet werden. Bei diesen Stoffen handelt es sich um bleichverstärkende Übergangsmetallsalze bzw. Übergangsmetallkomplexe wie beispielsweise Mangan-, Eisen-, Cobalt-, Ruthenium- oder Molybdän-Salenkomplexe oder carbonylkomplexe. Auch Mangan-, Eisen-, Cobalt-, Ruthenium-, Molybdän-, Titan-, Vanadium- und Kupfer-Komplexe mit stickstoffhaltigen Tripod-Liganden sowie Cobalt-, Eisen-, Kupfer- und Ruthenium-Aminkomplexe sind als Bleichkatalysatoren verwendbar.

Als Komponente ($F_S$) können die erfindungsgemäßen Spülmittelzusammensetzungen 0 bis 8 Gew.% Enzyme enthalten. Falls die Spülmittelzusammensetzungen Enzyme enthalten, enthalten sie diese bevorzugt in Mengen von 0,1 bis 8 Gew.%. Dem Spülmittel können Enzyme zugesetzt werden, um die Reinigungsleistung zu steigern oder unter milderen Bedingungen (z.B. bei niedrigen Temperaturen) die Reinigungsleistung in gleicher Qualität zu gewährleisten. Eingesetzt werden können die Enzyme in freier oder auf einem Träger chemisch oder physikalisch immobilisierter Form oder in verkapselter Form. Zu den am häufigsten verwendeten Enzymen gehören in diesem Zusammenhang Lipasen, Amylasen, Cellulasen und Proteasen. Weiterhin können beispielsweise auch Esterasen, Pectinasen, Lactasen und Peroxidasen eingesetzt werden. Bevorzugt werden erfindungsgemäß Amylasen und Proteasen eingesetzt.

Als Zusatzstoffe ($G_S$) können im Zusammenhang mit den erfindungsgemäßen Spülmittelzusammensetzungen beispielsweise anionische oder zwitterionische Tenside, Alkaliträger, polymere Dispergiermittel, Korrosionsinhibitoren, Entschäumer, Farbstoffe, Duftstoffe, Füllstoffe, Tablettensprengmittel, organische Lösungsmittel, Tablettierhilfsmittel,

Disintegrationsmittel, Verdicker, Löslichkeitsvermittler, oder Wasser eingesetzt werden. Als Alkaliträger können beispielsweise neben den bereits bei den Buildersubstanzen genannten Ammonium- oder Alkalimetallcarbonaten, Ammonium- oder Alkalimetallhydrogencarbonaten und Ammonium- oder Alkalimetallsesquicarbonaten auch Ammonium- oder Alkalimetallhydroxide, Ammonium- oder Alkalisilikate und Ammonium- oder Alkalimetasilikate sowie Gemische der vorgenannten Stoffe eingesetzt werden.
Als Korrosionsinhibitoren können unter anderem Silberschutzmittel aus der Gruppe der Triazole, der Benzotriazole, der Bisbenzotriazole, der Aminotriazole, der Alkylaminotriazole und der Übergangsmetallsalze oder- komplexe eingesetzt werden.
Zur Verhinderung von Glaskorrosion, welche sich durch Trübungen, Irisieren, Schlieren und Linien auf den Gläsern bemerkbar macht, werden bevorzugt Glaskorrosionsinhibitoren eingesetzt. Bevorzugte Glaskorrosionsinhibitoren sind beispielsweise Magnesium- Zink und Bismuth-Salze und Komplexe.
Paraffinöle und Silikonöle können erfindungsgemäß optional als Entschäumer und zum Schutz von Kunststoff- und Metalloberflächen eingesetzt werden. Entschäumer werden bevorzugt in Anteilen von 0,001 Gew% bis 5 Gew% eingesetzt. Außerdem können Farbstoffe wie beispielsweise Patentblau, Konservierungsmittel wie beispielsweise Kathon CG, Parfüme und sonstige Duftstoffe der erfindungsgemäßen Reinigungsformulierung zugesetzt werden.
Ein geeigneter Füllstoff im Zusammenhang mit den erfindungsgemäßen Spülmittelzusammenstzungen ist beispielsweise Natriumsulfat.
Als weitere mögliche Zusatzstoffe im Zusammenhang mit der vorliegenden Erfindung sind amphotere und kationische Polymere zu nennen.

In einer Ausführungsform ist die erfindungsgemäße Spülmittelzusammensetzung phosphatfrei. Unter dem Begriff "phosphatfrei" sind in diesem Zusammenhang auch solche Spülmittelzusammensetzungen umfasst, welche im Wesentlichen kein Phosphat, d.h. Phosphat in technisch unwirksamen Mengen enthalten. Dies umfasst insbesondere Zusammensetzungen mit weniger als 1,0 Gew%, bevorzugt weniger als 0,5 Gew% Phosphat bezogen auf die Gesamtzusammensetzung.

Die vorliegende Erfindung betrifft ferner Reinigungs- und Waschmittelzusammensetzungen, welche die erfindungsgemäß herstellbaren modifizierten Polyasparaginsäuren umfassen. Die Wasch- und Reinigungsmittelzusammensetzungen, in denen die erfindungsgemäßen modifizierten Polyasparaginsäuren eingesetzt werden können, können pulver-, granulat-, tabletten-, pasten-, gelförmig oder flüssig sein. Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, und Bügelhilfen. Sie enthalten mindestens 0,1 Gew%, bevorzugt zwischen 0,1 und 10 Gew% und besonders bevorzugt 0,2 bis 5 Gew% der erfindungsgemäß herstellbaren modifizierten Polyasparaginsäuren. Die Zusammensetzungen sind je nach ihrer vorgesehenen Anwendung in ihrer Zusammensetzung der Art der zu waschenden Textilien oder der zu reinigenden Oberflächen anzupassen. Sie enthalten konventionelle Wasch- und Reinigungsmittelinhaltsstoffe, wie sie dem Stand der Technik entsprechen. Repräsentative Beispiele für solche Wasch- und Reinigungsmittelinhaltsstoffe und -zusammensetzungen werden im Folgenden beschrieben.

Die vorliegende Erfindung betrifft ferner flüssige oder gelförmige Wasch- und Reinigungsmittelzusammensetzungen, enthaltend

($A_L$) 0,1 bis 20 Gew% mindestens einer hier beschriebenen und erfindungsgemäß einzusetzenden modifizierten Polyasparaginsäure,
($B_L$) 1 bis 80 Gew% Tenside,
($C_L$) 0,1 bis 50 Gew% Builder, Cobuilder und/oder Komplexbildner,
($D_L$) 0 bis 20 Gew% Bleichsystem,
($E_L$) 0,1 bis 60 Gew% Wasch- oder Reinigungsmittelinhaltsstoffe, d.h. andere übliche Inhaltsstoffe wie Alkaliträger, Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, organische Lösemittel, Löslichkeitsvermittler, pH-Stellmittel, Hydrotope, Verdicker, Rheologiemodifizierer und/oder Alkanolamine, und
($F_L$) 0 bis 98,7 Gew% Wasser.

Die Summe ($A_L$) bis ($F_L$) beträgt 100 Gew%.
Die Mengenverhältnisse der einzelnen Komponenten werden vom Fachmann abhängig vom jeweiligen Einsatzgebiet der flüssigen und gelförmigen Wasch- und Reinigungsmittelzusammensetzung eingestellt.

Die vorliegende Erfindung betrifft ferner feste Wasch- und Reinigungsmittelzusammensetzungen, enthaltend

($A_F$) 0,1 bis 20 Gew% mindestens einer hier beschriebenen und erfindungsgemäß einzusetzenden modifizierten Polyasparaginsäure,

($B_F$) 1 bis 50 Gew% Tenside,

($C_F$) 0,1 bis 70 Gew% Builder, Cobuilder und/oder Komplexbildner,

($D_F$) 0 bis 30 Gew% Bleichsystem, und

($E_F$) 0,1 bis 70 Gew% Wasch- oder Reinigungsmittelinhaltsstoffe, d.h. andere übliche Inhaltsstoffe wie Stellmittel (z.B. Natriumsulfat), Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, Auflösungsverbesserer, Sprengmittel, Prozesshilfsmittel und/oder Wasser.

Die Summe der Komponenten aus ($A_F$) bis ($E_F$) ergibt 100 Gew%.

Die festen Wasch- und Reinigungsmittelzusammensetzungen können beispielsweise in Pulver-, Granulat-, Extrudat- oder Tablettenform vorliegen.

Die Mengenverhältnisse der einzelnen Komponenten werden vom Fachmann abhängig vom jeweiligen Einsatzgebiet der festen Wasch- und Reinigungsmittelzusammensetzung eingestellt.

Als Tenside ($B_L$ oder $B_F$) können im Rahmen der vorliegenden Erfindung beispielsweise nichtionische Tenside (Niotenside, NIS) eingesetzt werden. Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen oder verzweigten Resten aus Alkoholen nativen oder petrochemischen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise $C_{12}$-$C_{14}$-Alkohole mit 3 EO, 5 EO, 7 EO oder 9 EO, $C_9$-$C_{11}$-Alkohol mit 7 EO, $C_{13}$-$C_{15}$-Alkohole mit 3 EO, 5 EO, 7 EO oder 9 EO, $C_{12}$-$C_{18}$-Alkohole mit 3 EO, 5 EO, 7 EO oder 9 EO und Mischungen aus diesen, wie Mischungen aus $C_{12}$-$C_{14}$-Alkohol mit 3 EO und $C_{12}$-$C_{18}$-Alkohol mit 7 EO, 2 Propylheptanol mit 3 bis 9 EO. Mischungen aus kurkettigen Alkoholethoxilaten (z. B. 2-Propylheptanol x 7 EO) und langkettigen Alkoholethoxilaten (z. B. C16,18 x 7 EO). Die angegebenen Ethoxylierungsgrade stellen statistische Mittelwerte (Zahlenmittel, Mn) dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die Ethylenoxid (EO)- und Propylenoxid (PO)-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside erfindungsgemäß auch Alkylglykoside der allgemeinen Formel (V)

$$R^{10}O(G)_i \qquad (V)$$

eingesetzt werden, worin $R^{10}$ für einen primären geradkettigen oder methylverzweigten, insbesondere in 2-Stellung methylverzweigten aliphatischen Rest mit 8 bis 22, vorzugsweise 12 bis 18 C-Atomen steht und G für eine Glykosideinheit mit 5 oder 6 C-Atomen, vorzugsweise für Glucose, steht. Der Oligomerisierungsgrad i, der die Verteilung von Monoglykosiden und Oligoglykosiden angibt, ist eine beliebige Zahl zwischen 1 und 10; vorzugsweise liegt i bei 1,2 bis 1,4.

Eine weitere Klasse im Rahmen der vorliegenden Erfindung bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO 90/13533 beschriebenen Verfahren hergestellt werden. Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können in diesem Zusammenhang geeignet sein. Die Menge (das Gewicht) dieser nichtionischen Tenside beträgt vorzugsweise nicht mehr als die der ethoxylierten Fettalkohole, insbesondere nicht mehr als die Hälfte

davon.
Weitere geeignete Tenside ($B_L$ oder $B_F$) sind erfindungsgemäß Polyhydroxyfettsäureamide der Formel (VI)

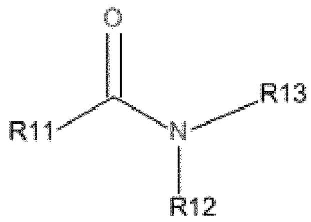

(VI),

worin R11C(=O) für einen aliphatischen Acylrest mit 6 bis 22 Kohlenstoffatomen, R12 für Wasserstoff, einen Alkyl- oder Hydroxyalkylrest mit 1 bis 4 Kohlenstoffatomen und R13 für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Zur Gruppe der Polyhydroxyfettsäureamide gehören in diesem Zusammenhang auch Verbindungen der Formel (VII)

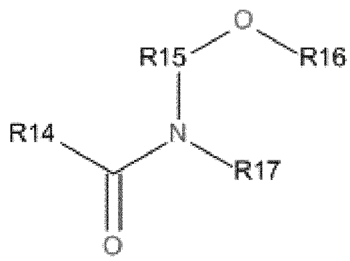

(VII),

worin R14 für einen linearen oder verzweigten Alkyl- oder Alkenylrest mit 7 bis 12 Kohlenstoffatomen, R15 für einen linearen, verzweigten oder cyclischen Alkylenrest mit 2 bis 8 Kohlenstoffatomen oder einen Arylenrest mit 6 bis 8 Kohlenstoffatomen, und R16 für einen linearen, verzweigten oder cyclischen Alkylrest oder einen Arylrest oder einen Oxy-Alkylrest mit 1 bis 8 Kohlenstoffatomen steht, wobei $C_1$-$C_4$-Alkyl- oder Phenylreste bevorzugt sind, und R17 für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. R17 wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielsweise gemäß WO 95/07331 durch Umsetzung mit Fettsäuremethylestern in Gegenwart eines Alkoxids als Katalysator in die gewünschten Polyhydroxyfettsäureamide überführt werden.
Tenside ($B_L$ oder $B_F$) können erfindungsgemäß auch anionische Tenside (Aniontenside) sein. Als anionische Tenside können im Rahmen der vorliegenden Erfindung beispielsweise solche vom Typ der Sulfonate und Sulfate eingesetzt. Als Tenside vom Sulfonat-Typ kommen dabei vorzugsweise $C_9$-$C_{13}$-Alkylbenzolsulfonate, Olefinsulfonate, d.h. Gemische aus Alken- und Hydroxyalkansulfonaten sowie Disulfonaten, wie man sie beispielsweise aus $C_{12}$-$C_{18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus $C_{12}$-$C_{18}$-Alkanen beispielsweise durch Sulfochlorierung oder Sulfoxidation mit anschließender Hydrolyse bzw. Neutralisation gewonnen werden. Ebenso sind auch die Ester von $\alpha$-Sulfofettsäuren (Estersulfonate), zum Beispiel die $\alpha$-sulfonierten Methylester der hydrierten Kokos-, Palmkern- oder Talgfettsäuren geeignet. Weitere geeignete Aniontenside können erfindungsgemäß sulfierte Fettsäureglycerinester sein. Unter Fettsäureglycerinestern sind unter anderem die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.
Als Alk(en)ylsulfate werden hierbei die Alkali- und insbesondere die Natriumsalze der Schwefelsäurehalbester

der $C_{12}$-$C_{18}$-Fettalkohole, beispielsweise aus Kokosfettalkohol, Talgfettalkohol, Lauryl-, Myristyl-, Cetyl- oder Stearylalkohol oder der $C_{10}$-$C_{20}$-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die $C_{12}$-$C_{16}$-Alkylsulfate und $C_{12}$-$C_{15}$-Alkylsulfate sowie $C_{14}$-$C_{15}$-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside. Auch die Schwefelsäuremonoester der mit 1 bis 6 Mol Ethylenoxid ethoxylierten geradkettigen oder verzweigten $C_7$-$C_{21}$-Alkohole, wie 2-Methylverzweigte $C_9$-$C_{11}$-Alkohole mit im Durchschnitt 3,5 Mol Ethylenoxid (EO) oder $C_{12}$-$C_{18}$-Fettalkohole mit 1 bis 4 EO, sind unter anderem geeignet. Sie werden üblicherweise in Reinigungsmitteln aufgrund ihres hohen Schaumverhaltens nur in relativ geringen Mengen, beispielsweise in Mengen von 1 bis 5 Gew%, eingesetzt. Weitere geeignete Aniontenside sind im Rahmen der vorliegenden Erfindung auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten $C_8$-$C_{18}$- Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit engerr Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können erfindungsgemäß in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Die Tenside ($B_L$ oder $B_F$) können im Zusammenhang der vorliegenden Erfindung auch kationische Tenside sein. Als besonders geeignete kationische Tenside seien hierbei beispielsweise genannt:

- $C_7$-$C_{25}$-Alkylamine;
- N,N-Dimethyl-N-(hydroxy-$C_7$-$C_{25}$-alkyl)ammoniumsalze;
- mit Alkylierungsmitteln quaternisierte Mono- und Di-($C_7$-$C_{25}$-alkyl)dimethylammoniumverbindungen;
- Esterquats, insbesondere quaternäre veresterte Mono-, Di- und Trialkanolamine, die mit $C_8$-$C_{22}$-Carbonsäuren verestert sind;
- Imidazolinquats, insbesondere 1-Alkylimidazoliniumsalze der Formeln VIII oder IX

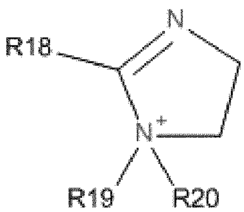

(VIII)

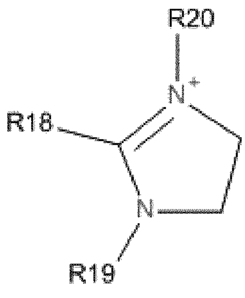

(IX),

wobei die Variablen folgende Bedeutung haben:

R18 $C_1$-$C_{25}$-Alkyl oder $C_2$-$C_{25}$-Alkenyl;
R19 $C_1$-$C_4$-Alkyl oder Hydroxy-$C_1$-$C_4$-alkyl;
R20 $C_1$-$C_4$-Alkyl, Hydroxy-$C_1$-$C_4$-alkyl oder ein Rest $R_1$-(CO)-$R^{21}$-$(CH_2)_j$-($R^{21}$:-O- oder -NH-; j: 2 oder 3),

wobei mindestens ein Rest R18 ein $C_7$-$C_{22}$-Alkyl ist.

Die Tenside ($B_L$ oder $B_F$) können im Zusammenhang der vorliegenden Erfindung auch amphotere Tenside sein. Geeignete amphotere Tenside sind hierbei z.B. Alkylbetaine, Alkylamidbetaine, Aminopropionate, Aminoglycinate und amphotere Imidazoliumverbindungen.

Der Gehalt an Tensiden in flüssigen und gelförmigen Wasch- und Reinigungsmittelzusammensetzungen beträgt erfindungsgemäß vorzugsweise 2 bis 75 Gew% und insbesondere 5 bis 65 Gew%, jeweils bezogen auf die gesamte Zusammensetzung.
Der Gehalt an Tensiden in festen Wasch- und Reinigungsmittelzusammensetzungen beträgt erfindungsgemäß vorzugsweise 2 bis 40 Gew% und insbesondere 5 bis 35 Gew%, jeweils bezogen auf die gesamte Zusammensetzung.
Als Builder, Cobuilder und Komplexbildner ($C_L$ oder $C_F$) eignen sich im Rahmen der vorliegenden Erfindung unter anderem anorganische Builder wie:

- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist;
- Kristalline Silikate, wie insbesondere Disilikate und Schichtsilikate, z.B. δ- und β-$Na_2Si_2O_5$. Die Silikate können in Form ihrer Alkalimetall-, Erdalkalimetall- oder Ammoniumsalze eingesetzt werden, bevorzugt sind die Na-, Li- und Mg-Silikate;
- Amorphe Silikate, wie Natriummetasilikat und amorphes Disilikat;
- Carbonate und Hydrogencarbonate: Diese können in Form ihrer Alkalimetall-, Erdalkalimetall- oder Ammoniumsalze eingesetzt werden. Bevorzugt sind Na-, Li- und Mg-Carbonate und -Hydrogencarbonate, insbesondere Natriumcarbonat und/oder Natriumhydrogencarbonat; sowie
- Polyphosphate, wie Pentanatriumtriphosphat.

Als Cobuilder und Komplexbildner ($C_L$ oder $C_F$) eignen sich im Rahmen der vorliegenden Erfindung unter anderem:

- Niedermolekulare Carbonsäuren, wie Citronensäure, hydrophob modifizierte Citronensäure, z. B. Agaricinsäure, Äpfelsäure, Weinsäure, Gluconsäure, Glutarsäure, Bernsteinsäure, Imidodibernsteinsäure, Oxydibernsteinsäure, Propantricarbonsäure, Butantetracarbonsäure, Cyclopentantetracarbonsäure, Alkyl- und Alkenylbernsteinsäuren und Aminopolycarbonsäuren, z.B. Nitrilotriessigsäure, β-Alanindiessigsäure, Ethylendiamintetraessigsäure, Serindiessigsäure, Isoserindiessigsäure, N-(2-Hydroxyethyl)-iminoessigsäure, Ethylendiamindibernsteinsäure, Glutaminsäurediessigsäure und Methyl- und Ethylglycindiessigsäure oder deren Alkalimetallsalze;
- Oligomere und polymere Carbonsäuren, wie Homopolymere von Acrylsäure, Copolymere der Acrylsäure mit Sulfonsäuregruppen haltigen Comonomeren wie 2-Acrylamido-2-methylpropansulfonsäure (AMPS), Allylsulfonsäure und Vinylsulfonsäure, Oligomaleinsäuren, Copolymere der Maleinsäure mit Acrylsäure, Methacrylsäure oder $C_2$-$C_{22}$-Olefinen, z.B. Isobuten oder langkettigen α-Olefinen, Vinyl-$C_{-1}$-$C_8$-alkylether, Vinylacetat, Vinylpropionat, (Meth)Acrylsäureester von $C_1$-$C_8$-Alkoholen und Styrol. Bevorzugt sind die Homopolymere der Acrylsäure und Copolymere von Acrylsäure mit Maleinsäure oder AMPS. Die oligomeren und polymeren Carbonsäuren werden in Säureform oder als Natriumsalz eingesetzt;
- Phosphonsäuren wie z.B. 1-Hydroxyethylen(1,1-diphosphonsäure), Aminotri(methylenphosphonsäure), Ethylendiamintetra(methylenphosphonsäure) und Diethylentriaminpenta(methylenphosphonsäure) und deren Alkalimetallsalze.

Als Bleichmittel ($D_L$ oder $D_F$) kommen erfindungsgemäß unter anderem in Betracht: Natriumperborattetrahydrat, Natriumperboratmono-hydrat, Natriumpercarbonat, Peroxypyrophosphate, Citratperhydrate sowie persaure Salze oder Persäuren, wie Perbenzoate, Peroxophthalate, Diperazelainsäure, Phthaloiminopersäure oder Diperdodecandisäure. Um beim Waschen bei Temperaturen von 60 °C und darunter eine verbesserte Bleichwirkung zu erreichen, können erfindungsgemäß Bleichaktivatoren in die Wasch- oder Reinigungsmittel eingearbeitet werden. Als Bleichaktivatoren können bspw. Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben,

eingesetzt werden. Geeignet sind unter anderem Substanzen, die O- und/oder N-Acylgruppen der genannten C-Atomzahl und/oder gegebenenfalls substituierte Benzoylgruppen tragen. Bevorzugt sind erfindungsgemäß mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU)1 N-Acylimide, insbesondere N-Nonanoylsuccinimid (NOSI), acylierte Phenolsulfonate, insbesondere n-Nonanoyloder Isononanoyloxybenzolsulfonat (nbzw. iso-NOBS), Carbonsäureanhydride, insbsondere Phthalsäureanhydrid, acylierte mehrwertige Alkohole, insbesondere Triacetin, Ethylenglykoldiacetat und 2,5-Diacetoxy-2,5- dihydrofuran. Zusätzlich zu den konventionellen Bleichaktivatoren oder an deren Stelle können erfindungsgemäß als Bestandteile ($D_L$) auch sogenannte Bleichkatalysatoren in die flüssigen Wasch- oder Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu- und Ru-Aminkomplexe sind als Bleichkatalysatoren verwendbar.

Übliche Inhaltsstoffe für Reinigungs- oder Waschmittelzusammensetzungen ($E_L$ oder $E_F$) sind dem Fachmann bekannt und umfassen beispielsweise Alkaliträger, Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, organische Lösemittel, Löslichkeitsvermittler, pH-Stellmittel, Hydrotope, Verdicker, Rheologiemodifizierer und/oder Alkanolamine für flüssige oder gelartige Reinigungs- oder Waschmittelzusammensetzungen ($E_L$), oder Stellmittel (z.B. Natriumsulfat), Entschäumer, Enzyme (z. B. Lipasen, Proteasen, Amylasen, Cellulasen), Farbstoffe, Duftstoffe, Parfümträger, Vergrauungsinhibitoren, Farbübertragungsinhibitoren, Farbschutzadditive, Faserschutzadditive, optische Aufheller, Soil-Release-Polyester, Korrosionsinhibitoren, Bakterizide und Konservierungsmittel, Auflösungsverbesserer, Sprengmittel, Prozesshilfsmittel und/oder Wasser für feste Reinigungs- oder Waschmittelzusammensetzungen ($E_F$).

Als Enzyme ($E_L$ oder $E_F$) kommen erfindungsgemäß insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie *Bacillus subtilis, Bacillus licheniformis, Streptomyceus griseus* und *Humicola insolens* gewonnene enzymatische Wirkstoffe. Vorzugsweise werden Proteasen vom Subtilisin-Typ und insbesondere Proteasen, die aus *Bacillus lentus* gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen können hierbei eingesetzt werden. Zu den geeigneten Amylasen zählen insbesondere $\alpha$-Amylasen, Iso-Amylasen, Pullulanasen und Pektinasen. Als Cellulasen werden vorzugsweise Cellobiohydrolasen, Endoglucanasen und $\beta$-Glucosidasen, die auch Cellobiasen genannt werden, bzw. Mischungen aus diesen eingesetzt. Da sich verschiedene Cellulase-Typen durch ihre CMCase und Avicelase-Aktivitäten unterscheiden, können durch gezielte Mischungen der Cellulasen die gewünschten Aktivitäten eingestellt werden.

Die Enzyme können erfindungsgemäß an Trägerstoffe adsorbiert sein, um sie gegen vorzeitige Zersetzung zu schützen. Der Anteil der Enzyme, Enzymmischungen oder Enzymgranulate kann erfindungsgemäß beispielsweise etwa 0,1 bis 5 Gew.-%, vorzugsweise 0,12 bis etwa 2,5 Gew.% betragen, jeweils bezogen auf die Gesamtformulierung.

Geeignete Vergrauungsinhibitoren ($E_L$ oder $E_F$) sind beispielsweise Carboxymethylcellulose, Pfropfpolymere von Vinylacetat auf Polyethylenglykol, und Alkoxylate des Polyethylenimins.

Als Verdicker ($E_L$) können sogenannte Assoziativverdicker verwendet werden. Geeignete Beispiele für Verdicker sind dem Fachmann bekannt unter anderem in WO 2009/019225 A2, EP 013 836 oder WO 2006/016035 beschrieben.

Optische Aufheller (sogenannte "Weißtöner") ($E_L$ oder $E_F$) können den flüssigen Wasch- oder Reinigungsmitteln im Rahmen der vorliegenden Erfindung zugesetzt werden, um Vergrauungen und Vergilbungen der behandelten Textilen Flächengebilden zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Dihydrochinolinone, 1,3- Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Als Farbübertragungsinhibitoren ($E_L$ oder $E_F$) geeignet sind erfindungsgemäß beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Waschmittelinhaltsstoffe sind im Übrigen allgemein bekannt. Detaillierte Beschreibungen sind z. B. in den WO 99/06524 und WO 99/04313; in Liquid Detergents, Editor: Kuo-Yann Lai, Surfactant Sci. Ser., Vol. 67, Marcel Decker, New York, 1997, p. 272-304, zu finden. Weitere detaillierte Beschreibungen der Wasch- und Reinigungsmittelinhaltsstoffe finden sich bspw. in: Handbook of Detergents, Part D: Formulation, Surfactant Sci Ser, Vol. 128, Editor: Michael S. Showell, CRC Press 2006; Liquid Detergents sec. Edition, Surfactant Sci Ser, Vol. 129, Editor: Kuo-Yann Lai, CRC Press 2006; oder Waschmittel: Chemie, Umwelt, Nachhaltigkeit, Günter Wagner, Wiley-VCH Verlag GmbH & Co. KGaA, August 2010.

Ein weiterer Gegenstand der vorliegenden Erfindung ist die Verwendung der erfindungsgemäß herstellbaren modifizierten Polyasparaginsäuren als Waschkraftverstärker, Vergrauungsinhibitor und Inkrustationsinihibitor in Wasch- und Reinigungsmittelzusammensetzungen (z.B. als Additive für Wasch- und Reinigungsmittel von Textilien, Waschhilfsmittel, Wäschenachbehandlungsmittel).

Ein weiterer Gegenstand der Erfindung ist die Verwendung der erfindungsgemäßen Polyasparaginsäuren oder deren Gemische als Belagsinhibitoren oder Dispergiermittel in wasserführenden Systemen. Wasserführende Systeme, in denen Polyasparaginsäuren, die nach dem erfindungsgemäßen Verfahren herstellbar sind, Verwendung finden können, sind prinzipiell alle Systeme, die permanent oder sporadisch in Kontakt mit Wasser wie Meerwasser, Brackwasser, Flusswasser, städtischen oder industriellen Abwässern oder industriellem Prozesswasser wie Kühlwasser in Kontakt kommen und in denen Belagsbildung auftreten kann. Wasserführende Systeme, in denen die erfindungsgemäßen Polymere verwendet werden können, sind insbesondere Meerwasserentsalzungsanlagen, Brackwasserentsalzungsanlagen, Kühlwassersysteme und Kesselspeisewassersysteme, Dampfkessel, Erhitzer, Durchlauferhitzer, Heißwasserspeicher, Kühltürme, Kühlwasserkreisläufe und sonstige industrielle Prozesswässer. Die Entsalzungsanlagen können thermischer Natur sein oder auf Membranverfahren wie Umkehrosmose oder Elektrodialyse beruhen.

Im Allgemeinen werden die erfindungsgemäßen Polymere den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäßen Polymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP) Diethylentriaminpenta(methylen-phosphonsäure) (DTPMP) und Ethylendiamintetra(methylenphophonsäure) (EDTMP), die jeweils in Säureform oder in Form ihrer Natriumsalze verwendet werden.

**Beispiel 1**

**Herstellung der modifizierten Polyasparaginsäuren**

Angegeben sind Molverhältnisse.

Erfindungsgemäße Polymere

Polymer 1: Polykondensat aus L-Asparaginsäure/BTC/HMDA 1,0/0,2/0,2
Polymer 2: Polykondensat aus L-Asparaginsäure/Citronensäure/HMDA 1,0/0,05/0,025
Polymer 3: Polykondensat aus L-Asparaginsäure/Citronensäure/Ethylendiamin 1,0/0,2 /0,075
Polymer 4: Polykondensat aus L-Asparaginsäure/BTC/4,7,10-Trioxatridecan-1,13-diamin 1,0/0,2/0,2
Polymer 5: Polykondensat aus L-Asparaginsäure/BTC/Polyetheramin der Formel I mit n=2,5 1,0/0,2/0,2
Polymer 6: Polykondensat aus L-Asparaginsäure/BTC/Polyetheramin der Formel I mit n=2,5 1,0/0,1/0,1
Polymer 7: Polykondensat aus L-Asparaginsäure/BTC/Ethanolamin 1/0,2/0,15

Vergleichspolymere

| | |
|---|---|
| Polymer V1: | Polyasparaginsäure, Na-salz, Mw 3000 g/mol |
| Polymer V2: | Polyasparaginsäure, Na-salz, Mw 5400 g/mol |
| Polymer V3: | Polykondensat aus L-Asparaginsäure/BTC 1,0/0,2, Mw 1870 g/mol |
| Polymer V4: | Copolymer aus MSA/$NH_3$/Citronensäure-Monohydrat/HMDA 1,0/1,1/0,05/0,014 (gem. Beispiel 5 aus WO 95/021882) |

BTC = 1,2,3,4 Butantetracarbonsäure
HMDA = Hexamethylendiamin
MSA = Maleinsäureanhydrid

Erfindungsgemäße Polymere

Polymer 1:

Es wurden 133.10 g L-Asparaginsäure, 46.83 g 1,2,3,4-Butantetracarbonsäure und 23,24 g Hexamethylendiamin in den Reaktor vorgelegt und 7 h bei 220 °C polykondensiert. Die resultierende Schmelze des modifizierten Polyaspartimids wurde abgekühlt, zerkleinert und zu einer wässrigen Natriumsalzlösung der modifizierten Polyasparaginsäure hydrolysiert. Um die wässrige Natriumsalzlösung der modifizierten Polyasparaginsäure herzustellen, dispergierte man 100 g der zerkleinerten Reaktionsmasse in 100 g Wasser, erwärmte die Mischung auf 70 °C und fügt bei dieser Temperatur so viel einer 50%igen wässrigen Natronlauge zu, so dass der pH-Wert im Bereich 7-8 lag. Dabei löste sich das in Wasser dispergierte Pulver allmählich auf und man erhielt eine klare wässrige Natriumsalzlösung der modifizierten Polyasparaginsäure. Das gewichtsmittlere Molekulargewicht Mw der modifizierten Polyasparaginsäure betrug 4300 g/mol.

Polymer 2:

Es wurde analog zu Polymer 1 133.10 g L-Asparaginsäure, 30.00 g Wasser, 9.61 g Zitronensäure und 2.91 g Hexamethylendiamin in den Reaktor vorgelegt und 5 h bei 220 °C polykondensiert. Die resultierende Schmelze des modifizierten Polyaspartimids wurde abgekühlt, zerkleinert und analog zu Polymer 1 zu einer wässrigen Natriumsalzlösung der modifizierten Polyasparaginsäure hydrolysiert. Das gewichtsmittlere Molekulargewicht Mw der modifizierten Polyasparaginsäure betrug 8760 g/mol.

Polymer 3:

Es wurde analog zu Polymer 1 133.10 g L-Asparaginsäure, 30.00 g Wasser, 38,43 g Zitronensäure und 4,50 g Ethylendiamin in den Reaktor vorgelegt und 7 h bei 220 °C polykondensiert. Die resultierende Schmelze des modifizierten Polyaspartimids wurde abgekühlt, zerkleinert und analog zu Polymer 1 zu einer wässrigen Natriumsalzlösung der modifizierten Polyasparaginsäure hydrolysiert. Das gewichtsmittlere Molekulargewicht Mw der modifizierten Polyasparaginsäure betrug 9470 g/mol.

Polymer 4:

Es wurde analog zu Polymer 1 133.10 g L-Asparaginsäure, 30.00 g Wasser, 46.83 g 1,2,3,4-Butantetracarbonsäure und 44.06 g 3-[2-[2-(3-aminopropoxy)ethoxy]ethoxy]propan-1-amin in den Reaktor vorgelegt und 7 h bei 220 °C polykondensiert. Die resultierende Schmelze des modifizierten Polyaspartimids wurde abgekühlt, zerkleinert und analog zu Polymer 1 beschrieben zu einer wässrigen Natriumsalzlösung der modifizierten Polyasparaginsäure hydrolysiert. Das gewichtsmittlere Molekulargewicht Mw der modifizierten Polyasparaginsäure betrug 22000 g/mol.

Polymer 5:

Es wurde analog zu Polymer 1 133.10 g L-Asparaginsäure, 30.00 g Wasser, 46.83 g 1,2,3,4-Butantetracarbonsäure und 46.00 g der Formel I mit n= 2,5 in den Reaktor vorgelegt und 7 h bei 220 °C polykondensiert. Die resultierende Schmelze des modifizierten Polyaspartimids wurde abgekühlt, zerkleinert und analog zu Polymer 1 zu einer wässrigen Natriumsalzlösung der modifizierten Polyasparaginsäure hydrolysiert. Das gewichtsmittlere Molekulargewicht Mw der modifizierten Polyasparaginsäure betrug 11400 g/mol.

Polymer 6:

Es wurde analog zu Polymer 1 133,10 g L-Asparaginsäure, 30,00 g Wasser, 23,42 g 1,2,3,4-Butantetracarbonsäure und 23,00 g Polyetheramin der Formel I mit n = 2,5 in den Reaktor vorgelegt und 7 h bei 220 °C polykondensiert. Die resultierende Schmelze des modifizierten Polyaspartimids wurde abgekühlt, zerkleinert und analog zu Polymer 1 zu einer wässrigen Natriumsalzlösung der modifizierten Polyasparaginsäure hydrolysiert. Das gewichtsmittlere Molekulargewicht Mw der modifizierten Polyasparaginsäure betrug 13150 g/mol.

Polymer 7:

Es wurde analog zu Polymer 1 133,10 g L-Asparaginsäure, 30,00 g Wasser, 46,83 g 1,2,3,4-Butantetracarbonsäure und 9,17 g Ethanolamin in den Reaktor vorgelegt und 7 h bei 220 °C polykondensiert. Die resultierende Schmelze des modifizierten Polyaspartimids wurde abgekühlt, zerkleinert und analog zu Polymer 1 zu einer wässrigen Natriumsalzlösung der modifizierten Polyasparaginsäure hydrolysiert. Das gewichtsmittlere Molekulargewicht Mw der modifizierten Polyasparaginsäure betrug 3800 g/mol.

Vergleichspolymere

Polymer V1:

In einem Rundkolben wurden 10 g Maleinsäureamid (hergestellt durch die Umsetzung von Maleinsäureanhydrid mit Ammoniak) für 2 h bei 240 °C polykondensiert. Die Reaktionsmasse blähte sich dabei schaumartig auf und ließ sich nach Abkühlen leicht zerkleinern. Das zerkleinerte Polyaspartimid wurde analog zu Polymer 1 zu einer wässrigen Polyasparaginsäure-Natriumsalzlösung hydrolysiert. Das gewichtsmittlere Molekulargewicht Mw betrug 3000 g/mol.

Polymer V2:

In einem Rotationsverdampfer wurden 133.10 g L-Asparaginsäure für 2 h bei einer Temperatur von 220-240°C polykondensiert. Das resultierende Polyaspartimid wurde analog zu Polymer 1 beschrieben zu einer wässrigen Polyasparaginsäure-Natriumsalzlösung hydrolysiert. Das gewichtsmittlere Molekulargewicht Mw betrug 5400 g/mol.

Polymer V3:

In einem 2 l fassenden Reaktor mit Rührer werden 133,10 g L-Asparaginsäure, 70 g Wasser und 46,83 g 1,2,3,4-Butantetracarbonsäure vorgelegt. Die Reaktionsmischung wird unter Rühren für 2,5 h bei einer Temperatur von 240 °C unter gleichzeitiger Abdestillation von Wasser erhitzt. Die entstehende Schmelze des modifizierten Polyaspartimids wird abgekühlt und anschließend zerkleinert. Um die wässrige Natriumsalzlösung der modifizierten Polyasparaginsäure herzustellen, dispergiert man 100 g der zerkleinerten Reaktionsmasse in 100 g Wasser, erwärmt die Mischung auf 70 °C und fügt bei dieser Temperatur so viel einer 50%igen wässrigen Natronlauge zu, so dass der pH-Wert im Bereich 7-8 liegt. Dabei löst sich das in Wasser dispergierte Pulver allmählich auf und man erhält eine klare wässrige Natriumsalzlösung der modifizierten Polyasparaginsäure. Das gewichtsmittlere Molekulargewicht (Mw) der modifizierten Polyasparaginsäure beträgt 1870 g/mol.

Polymer V4:

Es wurde ein Polyasparaginsäure/Citronensäure-Copolymer hergestellt gemäß der Beschreibung von Beispiel 5 aus WO 95/021882. Vorgelegt wurden 2,1 g (0,01 mol) Citronensäure-Monohydrat mit 0,32 g HMDA (0,0028 mol) zu 19,6 g (0,2 mol) Maleinsäureanhydrid wie in WO 95/021882 beschrieben und 30 g 30% wässriger $NH_3$-Lösung (0,22 mol). Die Polymerisation wurde durchgeführt wie in Beispiel 5 von WO 95/021882 beschrieben. Erhalten wurde eine relativ niederviskose Lösung. Das gewichtsmittlere Molekulargewicht (Mw) des entstandenen Copolymers wurde gemessen wie hierin in Beispiel 2 beschrieben. Es betrug 750 g/mol. Anschließend wurde ein $CaCO_3$-Inhibierungstest durchgeführt wie hierin in Beispiel 3 beschrieben und die Ergebnisse wurden in Tabelle 1 aufgeführt.

**Beispiel 2**

**Bestimmung des Molekulargewichts (Mw)**

Das gewichtsmittlere Molekulargewicht (Mw) der Beispiele wurde mit Hilfe von GPC (Gel-Permeations-Chromatographie) unter folgenden Bedingungen bestimmt:

| | |
|---|---|
| Säule | Suprema 100 10μ (Fa. Polymer Standard Service) |
| Elutionsmittel | 0,08 mol/l TRIS-Puffer pH = 7,0 in dest Wasser + 0,15 mol/l NaCl + 0,01 mol/l $NaN_3$ |
| Säulentemperatur | 35 °C |
| Durchflußgeschwindigkeit | 0.8 mL/min |
| Injektion | 100 μL |
| Konzentration | 1,5 mg/mL |
| Detektor | DRI Agilent 1100UV GAT-LCD 503 (260nm) |

Probelösungen wurden über Sartorius Minisart RC 25 (0,2 μm) filtriert. Die Kalibrierung erfolgte mit eng verteilten Na-PAA-Standards der Fa. Polymer Standard Service mit Molekulargewichten von M = 1.250 bis M = 193.800. Zusätzlich wurde Na-Acrylat mit einem Molekulargewicht von M=96 und ein PEG-Standard mit M=620, der mit Na-PAA M=150 gleichgesetzt. Die Werte außerhalb dieses Elutionsbereiches wurden extrapoliert. Die Auswertegrenze lag bei 295 g/mol.

**Beispiel 3**

**Calciumcarbonat-Inhibierungstest**

Eine Lösung aus $NaHCO_3$, $MgSO_4$, $CaCl_2$ und Polymer wurde 2 h bei 70 °C im Wasserbad geschüttelt. Nach Filtration der noch warmen Lösung über einen 0,45 μm Milexfilter wurde der Ca-Gehalt des Filtrats komplexometrisch oder mittels einer $Ca^{2+}$-selektiven Elektrode ermittelt und durch Vergleich vorher / nachher die $CaCO_3$-Inhibierung in % ermittelt (siehe Formel X).

| | |
|---|---|
| $Ca^{2+}$ | 215 mg/L |
| $Mg^{2+}$ | 43 mg/L |
| $HCO_3^-$ | 1220 mg/L |
| $Na^+$ | 460 mg/L |
| $Cl^-$ | 380 mg/L |
| $SO_4^{2-}$ | 170 mg/L |
| Polymer | 3 mg/L |
| Temperatur | 70 °C |
| Zeit | 2 Stunden |
| pH | 8,0-8,5 |

Formel X:

$CaCO_3$- Inhibierung (%) = [(mg ($Ca^{2+}$) nach 24 h – mg ($Ca^{2+}$) Blindwert nach 24 h) / (mg ($Ca^{2+}$) Nullwert – mg (Ca $^{2+}$) Blindwert nach 24 h)] x 100

**Tabelle 1:** $CaCO_3$-Inhibierung

| Beispiel | Inhibierung [%] |
|---|---|
| 1 | 64,0 |
| 2 | 71,0 |

(fortgesetzt)

| Beispiel | Inhibierung [%] |
|---|---|
| 3 | 58,9 |
| 7 | 65,9 |
| Polymer V1 | 47,8 |
| Polymer V3 | 52,3 |
| Polymer V4 | 13,9 |

**Beispiel 4**

**Geschirrspülmaschinentest**

Die Polymere wurden in der folgenden phosphatfreien Formulierung PF1 getestet.

**Tabelle 2**: Spülmittelprüfformulierung 1(PF1)

| Bestandteil | PF 1 |
|---|---|
| Protease | 2,5 |
| Amylase | 1,0 |
| Nichtionisches Tensid | 5 |
| Polymer | 10 |
| Natriumpercarbonat | 10,2 |
| Tetraacetylethylendiamin | 4 |
| Natriumdisilikat | 2 |
| Natriumcarbonat | 19,5 |
| Natriumcitrat-Dihydrat | 35 |
| Methylglycindiessigsäure, Na-Salz | 10 |
| Hydroxyethan-(1,1-diphosphonsäure) | 0,8 |
| Angaben in Gew% bezogen auf die Gesamtmenge aller Komponenten | |

Dabei wurden folgende Versuchsbedingungen eingehalten:

| | |
|---|---|
| Geschirrspüler: | Miele G 1222 SCL |
| Programm: | 65 °C (mit Vorspülen) |
| Spülgut: | 3 Messer (Nickelchrommesser Karina, Solex Germany GmbH, D-75239 Eisingen)<br>3 Trinkgläser Amsterdam 0,2L<br>3 FRÜHSTÜCKSTELLER "OCEAN BLAU" (MELAMIN)<br>3 Porzellanteller: FAHNENTELLER FLACH 19 CM |
| Anordnung: | Messer in der Besteckschublade, Gläser im oberen Korb, Teller im unteren Korb einsortiert |
| Geschirrspülmittel: | 18 g |
| Schmutzzugabe: | 50 g Ballastschmutz wird aufgetaut mit der Formulierung nach dem Vorspülen dosiert, Zusammensetzung siehe unten |
| Klarspültemperatur: | 65 °C |
| Wasserhärte: | 21 °dH (Ca/Mg):HCO3 (3:1):1.35 |
| Spülzyklen: | 15; dazwischen jeweils 1 h Pause (10 min geschlossene Tür, 50 min geöffnete Tür) |
| Auswertung: | Visuell nach 15 Spülzyklen |

Die Bewertung des Spülguts erfolgte nach 15 Zyklen in einer abgedunkelten Kammer unter Licht hinter einer Lochblende unter Verwendung einer Notenskala von 10 (sehr gut) bis 1 (sehr schlecht). Vergeben wurden sowohl Noten von 1 - 10 für Spotting (sehr viele, intensive Spots = 1, bis keine Spots = 10) als auch für Belag (1 = sehr starker Belag, 10 = kein Belag)

Zusammensetzung des Ballastschmutzes:

| | |
|---|---|
| Stärke: | 0,5 % Kartoffelstärke, 2,5 % Bratensoße |
| Fett: | 10,2 % Margarine |
| Protein: | 5,1 % Eigelb, 5,1 % Milch |
| Andere: | 2,5 % Tomatenketchup, 2,5 % Senf, 0,1 % Benzoesäure, 71,5 % Wasser |

Ergebnis:

Die Formulierungen mit erfindungsgemäßer modifizierter Polyasparaginsäure zeichneten sich insbesondere durch ihre sehr hohe belagsinhibierende Wirkung gegenüber anorganischen und organischen Ablagerungen auf Glas und Messern aus. Weiterhin erhöhten sie die Reinigungskraft des Geschirrspülmittels und begünstigten das Ablaufen des Wassers vom Spülgut, so dass besonders klare Gläser und glänzende Metallbesteckteile erhalten wurden. In der nachfolgenden Tabelle sind die addierten Noten für Belagsbildung (B) und Spotting (S) auf Messern und Trinkgläsern aufgeführt.

**Tabelle 3**: Testergebnisse Spülmittelprüfformulierung 1 (PF 1)

| Polymer | Messer (B+S) | Gläser (B+S) |
|---|---|---|
| ohne Polymer | 7,0 | 7,0 |
| Polymer 1 | 13,7 | 10,3 |
| Polymer 2 | 14,0 | 15,0 |
| Polymer 3 | 16,3 | 14,0 |
| Polymer 4 | 16,0 | 12,7 |
| Polymer 5 | 16,0 | 13,7 |
| Polymer 6 | 17.0 | 12,3 |
| Polymer 7 | 15,7 | 11,7 |
| | | |
| Polymer V1 | 8,3 | 7,7 |
| Polymer V2 | 12,3 | 9,0 |

**Beispiel 5**

**Bestimmung der anorganischen Gewebeablagerungen (Inkrustierung)**

Die in Tabelle 4 beschriebene Waschmittelformulierung wurde zum Waschen von Testgewebe aus Baumwolle verwendet. Die Waschbedingungen sind in Tabelle 5 wiedergegeben. Die Zahl der Waschzyklen betrug 15. Nach dieser Anzahl von Wäschen wurde der Aschegehalt des Prüfgewebes durch Veraschung bei 700 °C ermittelt.

**Tabelle 4:** Waschmittelprüfformulierung 2 (PF2)

| Bestandteil | PF 2 |
|---|---|
| Lineares $C_9$-$C_{13}$-Alkylbenzolsulfonat (LAS) | 15 |
| C12-C14-Fettalkohol x 7 EO | 3 |
| Polymer | 5 |
| Natriumsilikat | 10 |

(fortgesetzt)

| Bestandteil | PF 2 |
|---|---|
| Natriumcarbonat | 20 |
| Natriumcitrat-Dihydrat | 2 |
| Seife | 1,5 |
| Carboxymethylcellulose | 1,0 |
| Diethylentriaminpenta(methylen-phosphonsäure) | 0,5 |
| Natriumsulfat | 42 |
| Angaben in Gew% bezogen auf die Gesamtmenge aller Komponenten | |

**Tabelle 5**: Waschbedingungen Inkrustierung

| Gerät | Launder-o-meter der Fa. Atlas, Chicago, USA |
|---|---|
| Waschflotte | 250 ml |
| Waschdauer | 20 min |
| Waschtemperatur | 60 °C |
| Waschzyklen | 15 |
| Waschmitteldosierung | 5 g/l |
| Wasserhärte | 3,2 mmol/l Ca, 0,8 mmol/l Mg, 6,4 mol/l Hydrogencarbonat |
| Flottenverhältnis | 1 : 12,5 |
| Prüfgewebe | Baumwollgewebe wfk 10A |
| wfk = wfk cleaning technology institute e.V., Krefeld, Deutschland | |

In der nachfolgenden Tabelle 6 sind die Prüfergebnisse (Aschegehalt des Gewebes in Gew%) aufgeführt.

**Tabelle 6**: Testergebnisse Waschmittelprüfformulierung 2 (PF2)

| Polymer | Aschegehalt in Gew% |
|---|---|
| ohne Polymer | 3,85 |
| Polymer 1 | 1,70 |
| Polymer 2 | 1,65 |
| Polymer 5 | 1,55 |
| Polymer 7 | 1,50 |
| Polymer V2 | 2,15 |
| Polymer V3 | 2,30 |

## Patentansprüche

**1.** Verfahren zur Herstellung modifizierter Polyasparaginsäure oder ihrer Salze, umfassend folgende Schritte:

(i) Polykondensation von

(a) 50 bis 98 mol% Asparaginsäure,
(b) 1 bis 49 mol% mindestens einer carboxylgruppenhaltigen Verbindung, und

(c) 1 bis 30 mol% eines Diamins oder eines Aminoalkohols,

bei einer Temperatur von 100 bis 270 °C für 1 Minute bis 50 Stunden, wobei (b) keine Asparaginsäure ist;
(ii) anschließender Hydrolyse der Cokondensate unter Zugabe einer Base; und
(iii) optional Ansäuern des in (ii) erhaltenen Salzes der Polyasparaginsäure mit Mineralsäuren,

wobei das Verhältnis von (b):(c) zwischen 5:1 und 1:1,5 liegt.

**2.** Modifizierte Polyasparaginsäure oder ihrer Salze erhältlich nach dem Verfahren nach Anspruch 1.

**3.** Spülmittelzusammensetzungen umfassend

(As) 1-20 Gew%, bevorzugt 1-15 Gew%, besonders bevorzugt 2-12 Gew% mindestens einer modifizierten Polyasparaginsäure nach Anspruch 2;
($B_S$) 0-50 Gew% Komplexbildner;
($C_S$) 0,1-80 Gew% Builder und/oder Co-Builder;
($D_S$) 0,1-20 Gew% nichtionische Tenside;
($E_S$) 0-30 Gew% Bleichmittel, Bleichaktivatoren und Bleichkatalysatoren;
($F_S$) 0-8 Gew% Enzyme; und
($G_S$) 0-50 Gew% Zusatzstoffe.

**4.** Flüssige oder gelförmige Wasch- und Reinigungsmittelzusammensetzungen, enthaltend

($A_L$) 0,1 bis 20 Gew% mindestens einer modifizierten Polyasparaginsäure nach Anspruch 2,
($B_L$) 1 bis 80 Gew% Tenside,
($C_L$) 0,1 bis 50 Gew% Builder, Cobuilder und/oder Komplexbildner,
($D_L$) 0 bis 20 Gew% Bleichsystem,
($E_L$) 0,1 bis 60 Gew% Wasch- oder Reinigungsmittelinhaltsstoffe, und
($F_L$) 0 bis 98,7 Gew% Wasser.

**5.** Feste Wasch- und Reinigungsmittelzusammensetzungen, enthaltend

($A_F$) 0,1 bis 20 Gew% mindestens einer modifizierten Polyasparaginsäure nach Anspruch 2,
($B_F$) 1 bis 50 Gew% Tenside,
($C_F$) 0,1 bis 70 Gew% Builder, Cobuilder und/oder Komplexbildner,
($D_F$) 0 bis 30 Gew% Bleichsystem, und
($E_F$) 0,1 bis 70 Gew% Wasch- oder Reinigungsmittelinhaltsstoffe.

**6.** Verwendung der modifizierten Polyasparaginsäure erhältlich nach Verfahren nach Anspruch 1 als Belagsinhibitor und/oder Dispergiermittel.

**7.** Verwendung der modifizierten Polyasparaginsäure erhältlich nach Verfahren nach Anspruch 1 oder Verwendung nach Anspruch 6, wobei die Polyasparaginsäure als Zusatzstoff in Reinigungs-, Spül- oder Waschmitteln verwendet wird.

**8.** Verwendung der modifizierten Polyasparaginsäure erhältlich nach Verfahren nach Anspruch 1 oder Verwendung nach Anspruch 6, wobei die Polyasparaginsäure als Belagsinhibitor und/oder Dispergiermittel in wasserführenden Systemen verwendet wird.

**9.** Verwendung nach Anspruch 8, wobei das wasserführende System ausgewählt ist aus der Gruppe bestehend aus Meerwasserentsalzungsanlage, Brackwasserentsalzungsanlage, Kühlwassersystem, Kesselspeisewassersystem und industrielles Prozesswasser.

**10.** Verwendung nach Anspruch 8 oder 9, wobei 0,1 mg/l bis 100 mg/l modifizierte Polyasparaginsäure eingesetzt wird.

## Claims

1. A process for preparing modified polyaspartic acid or salts thereof, comprising the following steps:

   (i) polycondensation of

      (a) 50 to 98 mol% of aspartic acid,
      (b) 1 to 49 mol% of at least one compound containing carboxyl groups, and
      (c) 1 to 30 mol% of a diamine or an amino alcohol,

   at a temperature of 100 to 270°C for 1 minute to 50 hours, where (b) is not aspartic acid;
   (ii) subsequent hydrolysis of the cocondensates with addition of a base; and
   (iii) optional acidification of the salt of polyaspartic acid obtained in (ii) with mineral acids,

2. A modified polyaspartic acid or salts thereof obtainable by the process according to claim 1.

3. A dishwashing composition comprising

   ($A_S$) 1-20 wt%, preferably 1-15 wt% and more preferably 2-12 wt% of at least one modified polyaspartic acid according to claim 2;
   ($B_S$) 0-50 wt% of complexing agents;
   ($C_S$) 0.1-80 wt% of builders and/or cobuilders;
   ($D_S$) 0.1-20 wt% of nonionic surfactants;
   ($E_S$) 0-30 wt% of bleaches, bleach activators and bleach catalysts;
   ($F_S$) 0-8 wt% of enzymes; and
   ($G_S$) 0-50 wt% of additives.

4. A detergent and cleaning composition in liquid or gel form, comprising

   ($A_L$) 0.1 to 20 wt% of at least one modified polyaspartic acid according to claim 2,
   ($B_L$) 1 to 80 wt% of surfactants,
   ($C_L$) 0.1 to 50 wt% of builders, cobuilders and/or complexing agents,
   ($D_L$) 0 to 20 wt% of bleach system,
   ($E_L$) 0.1 to 60 wt% of detergent or cleaning composition ingredients, and
   ($F_L$) 0 to 98.7 wt% of water.

5. A solid detergent and cleaning composition comprising

   ($A_F$) 0.1 to 20 wt% of at least one modified polyaspartic acid according to claim 2,
   ($B_F$) 1 to 50 wt% of surfactants,
   ($C_F$) 0.1 to 70 wt% of builders, cobuilders and/or complexing agents,
   ($D_F$) 0 to 30 wt% of bleach system, and
   ($E_F$) 0.1 to 70 wt% of detergent or cleaning composition ingredients.

6. The use of the modified polyaspartic acid obtainable according to process according to claim 1 as scale inhibitor and/or dispersant.

7. The use of the modified polyaspartic acid obtainable according to process according to claim 1 or use according to claim 6, wherein the polyaspartic acid is used as additive in cleaning, dishwashing or detergent compositions.

8. The use of the modified polyaspartic acid obtainable according to process according to claim 1 or use according to claim 6, wherein the polyaspartic acid is used as scale inhibitor and/or dispersant in water-conducting systems.

9. The use according to claim 8, wherein the water-conducting system is selected from the group consisting of seawater desalination plant, brackish water desalination plant, cooling water system, boiler feed water system and industrial process water.

10. The use according to claim 8 or 9, wherein 0.1 mg/L to 100 mg/L of modified polyaspartic acid is used.

## Revendications

1. Procédé pour la préparation de poly(acide aspartique) modifié ou de ses sels, comprenant les étapes suivantes :

   (i) polycondensation de

      (a) 50 à 98% en mole d'acide aspartique,
      (b) 1 à 49% en mole d'au moins un composé contenant des groupes carboxyle et
      (c) 1 à 30% en mole d'une diamine ou d'un aminoalcool,

   à une température de 100 à 270°C pendant 1 minute à 50 heures, (b) n'étant pas de l'acide aspartique ;
   (ii) hydrolyse consécutive des produits de cocondensation avec addition d'une base ; et
   (iii) acidification facultative du sel du poly(acide aspartique) obtenu dans l'étape (ii) par des acides minéraux,

   le rapport de (b):(c) étant situé entre 5:1 et 1:1,5.

2. Poly(acide aspartique) modifié ou ses sels pouvant être obtenu(s) selon le procédé selon la revendication 1.

3. Compositions de produit de vaisselle comprenant

   ($A_S$) 1-20% en poids, de préférence 1-15% en poids, de manière particulièrement préférée 2-12% en poids d'au moins un poly(acide aspartique) modifié selon la revendication 2 ;
   ($B_S$) 0-50% en poids de complexants ;
   ($C_S$) 0,1-80% en poids d'adjuvants et/ou de coadjuvants ;
   ($D_S$) 0,1-20% en poids d'agents tensioactifs non ioniques ;
   ($E_S$) 0-30% en poids d'agents de blanchiment, d'activateurs de blanchiment et de catalyseurs de blanchiment,
   ($F_S$) 0-8% en poids d'enzymes ; et
   ($G_S$) 0-50% en poids d'additifs.

4. Compositions liquides ou sous forme de gel de détergent et d'agent de nettoyage, contenant

   ($A_L$) 0,1 à 20% en poids d'au moins un poly(acide aspartique) modifié selon la revendication 2,
   ($B_L$) 1 à 80% en poids de tensioactifs,
   ($C_L$) 0,1 à 50% en poids d'adjuvants, de coadjuvants et/ou de complexants,
   ($D_L$) 0 à 20% en poids de système de blanchiment,
   ($E_L$) 0,1 à 60% en poids de constituants de détergent ou d'agent de nettoyage et
   ($F_L$) 0 à 98,7% en poids d'eau.

5. Compositions solides de détergent et d'agent de nettoyage, contenant

   ($A_F$) 0,1 à 20% en poids d'au moins un poly(acide aspartique) modifié selon la revendication 2,
   ($B_F$) 1 à 50% en poids de tensioactifs,
   ($C_F$) 0,1 à 70% en poids d'adjuvants, de coadjuvants et/ou de complexants,
   ($D_F$) 0 à 30% en poids de système de blanchiment et
   ($E_F$) 0,1 à 70% en poids de constituants de détergent et d'agent de nettoyage.

6. Utilisation du poly(acide aspartique) modifié pouvant être obtenu selon procédé selon la revendication 1 en tant qu'inhibiteur d'incrustations et/ou en tant que dispersant.

7. Utilisation du poly(acide aspartique) modifié pouvant être obtenu selon procédé selon la revendication 1 ou utilisation selon la revendication 6, le poly(acide aspartique) étant utilisé comme additif dans des agents de nettoyage, des produits de vaisselle ou des détergents.

8. Utilisation du poly(acide aspartique) modifié pouvant être obtenu selon procédé selon la revendication 1 ou utilisation selon la revendication 6, le poly(acide aspartique) étant utilisé comme inhibiteur d'incrustations et/ou comme dispersant dans des systèmes guidant l'eau.

9. Utilisation selon la revendication 8, le système guidant l'eau étant choisi parmi les installations de dessalement de

l'eau de mer, les installations de dessalement de l'eau saumâtre, les systèmes d'eau de refroidissement, les systèmes d'eau d'alimentation de chaudière et les eaux de procédés industriels.

**10.** Utilisation selon la revendication 8 et/ou 9, 0,1 mg/l à 100 mg/l de poly (acide aspartique) modifié étant utilisés.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011001170 A
- WO 2009095645 A
- WO 95021882 A
- WO 9401486 A
- WO 9521882 A
- DE 4221875
- EP 851023 A
- DE 19819187 A
- US 5422028 A
- US 5294362 A
- US 5292447 A
- US 5039447 A
- JP 58217598 A
- WO 9013533 A
- WO 9507331 A
- US 3234258 A
- US 5075041 A
- WO 2009019225 A2
- EP 013836 A
- WO 2006016035 A
- WO 9906524 A
- WO 9904313 A


### In der Beschreibung aufgeführte Nicht-Patentliteratur


- Surfactant Sci. Ser. Liquid Detergents. Marcel Decker, 1997, vol. 67, 272-304
- Formulation, Surfactant Sci Ser. Handbook of Detergents. CRC Press, 2006, vol. 128
- Surfactant Sci Ser. Liquid Detergents. CRC Press, 2006, vol. 129
- **GÜNTER WAGNER.** Waschmittel: Chemie, Umwelt, Nachhaltigkeit. Wiley-VCH Verlag GmbH & Co. KGaA, August 2010